# EUROPEAN PATENT APPLICATION

(11) **EP 4 566 907 A1**
(43) Date of publication of application: **11.06.2025**
(21) Application number: 23859125.9
(22) Date of filing: 11.08.2023
(51) Int. Cl.: B60W 60/00, B60W 40/08, B60W 50/14

(54) **METHOD, DEVICE, AND SYSTEM FOR REMINDING DRIVER, AND MOBILE VEHICLE**

(30) Priority: 01.09.2022 CN 202211069559
(71) Applicant: Shenzhen Yinwang Intelligent Technologies Co., Ltd., Shenzhen, Guangdong 518129 (CN)
(72) Inventor: LU, Yuanzhi, Shenzhen, Guangdong 518129 (CN); GAO, Liangzhu, Shenzhen, Guangdong 518129 (CN); LV, Zibo, Shenzhen, Guangdong 518129 (CN)
(74) Representative: Körber, Martin Hans
(86) International application number: PCT/CN2023/112557
(87) International publication number: WO 2024/046091

(57) **Abstract**

This application provides a driver reminding method, apparatus, and system, and a moving carrier (100). The method includes: when a moving carrier (100) is in a traveling state, obtaining first data collected by a sensor of a mobile terminal, and obtaining second data collected by a sensor of a cockpit of the moving carrier (100); determining a driver status based on the first data and the second data; and when the driver status indicates that a driver is not in a loop, controlling a prompt apparatus to prompt the driver to take over the moving carrier (100).

## Description

This application claims priority to Chinese Patent Application No. 202211069559.0, filed with the China National Intellectual Property Administration on September 1, 2022 and entitled "DRIVER REMINDING METHOD, APPARATUS, AND SYSTEM, AND MOVING CARRIER", which is incorporated herein by reference in its entirety.

### TECHNICAL FIELD

Embodiments of this application relate to the field of intelligent driving, and more specifically, to a driver reminding method, apparatus, and system, and a moving carrier.

### BACKGROUND

With intelligent development of vehicles, the society of automotive engineers international (society of automotive engineers international, SAE international) classifies autonomous driving technologies into six levels: an L0 to an L5. Fully autonomous driving is a goal of intelligent development of vehicles. However, in this development process, autonomous driving below an L3 level still belongs to assisted driving, and a driver is still a main responsible entity for an accident. The driver should always pay attention to a driving task and a surrounding traffic scenario of the vehicle. Therefore, a driver monitor system (driver monitor system, DMS) and a hierarchical reminder system are autonomous driving mandatory admission function systems below the L3 level.

When an autonomous driving system is faulty, or a vehicle driving condition is outside an operation design domain (operation design domain, ODD), or the vehicle is in an emergency, the driver monitor system is used to monitor a status of the driver in a loop in real time, and the hierarchical reminder system may be used to remind the driver in time to take over the vehicle, to ensure traveling safety.

A current driver monitor system and a current hierarchical reminder system are mainly used in an advanced driver assistant system (advanced driver assistant system, ADAS) below the L3 level, and mainly displays takeover reminder information by using an in-vehicle instrument to remind the driver to take over the vehicle. However, if the driver pays attention to a mobile terminal (for example, a mobile phone), the driver may miss, due to diverting of attention, the takeover reminder information sent by the driver monitor system and the hierarchical reminder system that are based on the in-vehicle instrument. Consequently, a risk of a traffic accident is increased.

Therefore, in a process of starting the autonomous driving system (autonomous driving system, ADS), when the driver is required to take over the vehicle, how to ensure that the driver can receive the reminder information to help the driver effectively take over the vehicle in time becomes an urgent problem to be resolved.

### SUMMARY

Embodiments of this application provide a driver reminding method, apparatus, and system, and a moving carrier, to ensure that a driver can receive reminder information to help the driver effectively take over the moving carrier in time. This improves safety of the moving carrier.

According to a first aspect, a driver reminding method is provided. The method includes: when a moving carrier is in a traveling state, obtaining first data collected by a sensor of a mobile terminal, and obtaining second data collected by a sensor of a cockpit of the moving carrier; determining a driver status based on the first data and the second data; and when the driver status indicates that a driver is not in a loop, controlling a prompt apparatus to prompt the driver to take over the moving carrier.

In this application, the first data obtained by the mobile terminal can compensate for a disadvantage of the second data collected by the cockpit in terms of a field of view, and the driving status determined based on multivariable data can improve accuracy of determining the driver status. Based on the accurate driver status, a driver takeover reminder sent due to false detection of a DMS can be prevented, and user experience can be improved. In addition, this can help send driver reminders by a plurality of devices, reduce a safety risk caused by missing the reminder by the driver, and improve traveling safety.

With reference to the first aspect, in some implementations of the first aspect, the method further includes: sending first prompt information to the mobile terminal, where the first prompt information indicates the driver to take over the moving carrier.

In this application, the mobile terminal and the takeover prompt apparatus of the cockpit collaboratively send takeover reminder information to the driver, to reduce a possibility that an accident occurs on the moving carrier because the driver misses the takeover reminder sent in the cockpit, and improve effectiveness and timeliness of transferring the takeover reminder information. In this way, safety of the moving carrier is improved.

With reference to the first aspect, in some implementations of the first aspect, the sending first prompt information to the mobile terminal includes: sending the first prompt information to the mobile terminal when it is detected that the driver pays attention to the mobile terminal.

In this application, when the driver is not in the loop and the driver pays attention to the mobile terminal, the mobile terminal and the prompt apparatus of the cockpit send the takeover reminder at the first time, so that when the driver pays attention to the mobile terminal, missing of the takeover reminder displayed on the takeover reminding apparatus of the cockpit can be prevented, and effectiveness of sending the takeover reminder and timeliness of receiving the takeover reminder by the driver can be improved. In this way, safety of the moving carrier is improved.

In some possible implementations, when it is detected that the driver pays attention to the mobile terminal, the first prompt information is sent to the mobile terminal in a first hierarchical reminder mode of the mobile terminal.

For example, the first hierarchical reminder mode of the mobile terminal includes a first-level reminder of the mobile terminal, a second-level reminder of the mobile terminal, and a third-level reminder of the mobile terminal. The first-level reminder of the mobile terminal may include a display reminder of the mobile terminal. The second-level reminder of the mobile terminal may include a display reminder and a sound reminder of the mobile terminal, or include a display reminder and a vibration reminder of the mobile terminal. The three-level reminder of the mobile terminal includes a display reminder, a sound reminder, and a vibration reminder of the mobile terminal.

In some possible implementations, when the driver status indicates that the driver is not in the loop, and it is not detected that the driver pays attention to the mobile terminal, the first prompt information is sent to the mobile terminal in a second hierarchical reminder mode of the mobile terminal.

For example, the second-level reminder mode of the mobile terminal includes a first-level reminder of the mobile terminal, a second-level reminder of the mobile terminal, and a third-level reminder of the mobile terminal. The first-level reminder of the mobile terminal may include a vibration reminder of the mobile terminal or a sound reminder of the mobile terminal. The second-level reminder of the mobile terminal may include a vibration reminder and a sound reminder of the mobile terminal. The three-level reminder of the mobile terminal includes a display reminder, a sound reminder, and a vibration reminder of the mobile terminal.

In this application, when the driver is not in the loop and it is not detected that the driver pays attention to the mobile terminal, the takeover reminder is sent on a takeover reminding apparatus of the mobile terminal in the vibration manner or the sound manner, so that when the driver does not pay attention to the mobile terminal and the driver is not in the loop, a possibility of missing the takeover reminder can be reduced, and effectiveness of sending the takeover reminder and timeliness of receiving the takeover reminder by the driver are further improved. In this way, safety of the moving carrier is improved.

With reference to the first aspect, in some implementations of the first aspect, the controlling a prompt apparatus to prompt the driver to take over the moving carrier includes: controlling, based on duration in which the driver is not in the loop, the prompt apparatus to prompt the driver to take over the moving carrier.

In some possible implementations, the prompt apparatus is controlled, based on a level of duration in which the driver is not in the loop, to prompt, in a hierarchical reminder mode of the cockpit, the driver to take over the moving carrier.

For example, when the duration in which the driver is not in the loop reaches a first threshold (for example, 15s), a display apparatus of the cockpit is controlled to prompt, through a first-level reminder of the cockpit, the driver to take over the moving carrier. If the driver does not take over the moving carrier under the first-level reminder of the cockpit, when the duration in which the driver is not in the loop accumulates to a second threshold (for example, 30s), a display apparatus and a sound-making apparatus of the cockpit are controlled to prompt, through a second-level reminder of the cockpit, the driver to take over the moving carrier. If the driver does not take over the moving carrier under the second-level reminder of the cockpit, when the duration in which the driver is not in the loop accumulates to a third threshold (for example, 50s), the display apparatus, the sound-making apparatus, and a seat belt vibration apparatus of the cockpit are controlled to prompt, through a third-level reminder of the cockpit, the driver to take over the moving carrier.

With reference to the first aspect, in some implementations of the first aspect, the controlling a prompt apparatus to prompt the driver to take over the moving carrier includes: when the driver status indicates that the driver is not in the loop and an emergency event is detected, controlling the prompt apparatus to prompt the driver to take over the moving carrier.

In some possible implementations, after the emergency event is detected, a display apparatus is controlled to prompt, through a first-level reminder of the cockpit, the driver to take over the moving carrier. If the driver does not take over the moving carrier under the first-level reminder of the cockpit, based on a level of the duration in which the driver is not in the loop, the prompt apparatus is controlled to prompt, in a hierarchical reminder mode of the cockpit, the driver to take over the moving carrier.

For example, if the driver does not take over the moving carrier in a first-level reminder mode of the cockpit, and the duration in which the driver is not in the loop reaches a fourth threshold (for example, 20s), a display apparatus and a sound-making apparatus of the cockpit are controlled to prompt, through a second-level reminder of the cockpit, the driver to take over the moving carrier. If the driver does not take over the moving carrier under the second-level reminder of the cockpit, when the duration in which the driver is not in the loop accumulates to a fifth threshold (for example, 35s), the display apparatus, the sound-making apparatus, and a seat belt vibration apparatus of the cockpit are controlled to prompt, through a third-level reminder of the cockpit, the driver to take over the moving carrier.

In this application, when the driver is not in the loop, if the first-level reminder of the cockpit is triggered through the emergency event, the prompt apparatus may be controlled, based on the level of the duration in which the driver not in the loop, to prompt the driver to take over the moving carrier, so that takeover reminder information can be effectively transferred to the driver in time. In this way, traveling safety is improved.

With reference to the first aspect, in some implementations of the first aspect, the method further includes: before the prompt apparatus is controlled to prompt the driver to take over the moving carrier, determining that a traveling speed of the moving carrier is greater than or equal to a speed threshold.

In this application, the traveling speed of the moving carrier is used as a factor to be considered for triggering the takeover reminder, so that traveling safety and user experience can be further improved. For example, when an autonomous driving system enables an autonomous parking function, the driver may take off the hand and get out of the eyes. In this case, the speed of the moving carrier is less than the speed threshold. Unless the emergency occurs, the driver does not receive the takeover reminder information. In this way, user experience can be improved.

With reference to the first aspect, in some implementations of the first aspect, the prompt apparatus is controlled to prompt the driver to take over the moving carrier while the first prompt information is sent to the mobile terminal.

With reference to the first aspect, in some implementations of the first aspect, the method further includes: recording a response parameter indicating that the driver takes over the moving carrier; sending the response parameter to a cloud server, where the response parameter is used to determine a driving behavior score of the driver, and the driving behavior score is used to evaluate behavior safety of the driver; and receiving customization information from the cloud server, where the customization information is determined based on the driving behavior score.

In this application, when a result indicating that the driver is not in the loop is obtained through data collected by a driver monitoring apparatus of the cockpit and the data collected by the mobile terminal, a driver reminder sent based on the result is more accurate, so that the response parameter of the driver taking over the moving carrier is recorded more accurately. In this way, accuracy of subsequent information push is improved.

According to a second aspect, a driver reminding apparatus is provided. The apparatus includes an obtaining unit, a determining unit, and a control unit. The obtaining unit is configured to: when a moving carrier is in a traveling state, obtain first data collected by a sensor of a mobile terminal, and obtain second data collected by a sensor of a cockpit of the moving carrier. The determining unit is configured to determine a driver status based on the first data and the second data. The control unit is configured to: when the driver status indicates that a driver is not in a loop, control a prompt apparatus to prompt the driver to take over the moving carrier.

In this application, the first data obtained by the mobile terminal can compensate for a disadvantage of the second data collected by the cockpit in terms of a field of view, and the driving status determined based on multivariable data can improve accuracy of determining the driver status. Based on the accurate driver status, a driver reminder sent due to false detection of a DMS can be prevented, and user experience can be improved. In addition, this can help send driver reminders by a plurality of devices, reduce a safety risk caused by missing the takeover reminder by the driver, and improve traveling safety.

With reference to the second aspect, in some implementations of the second aspect, the apparatus further includes a communication unit. The communication unit is configured to send first prompt information to the mobile terminal, where the first prompt information indicates the driver to take over the moving carrier.

In this application, the mobile terminal and the takeover prompt apparatus of the cockpit collaboratively send takeover reminder information to the driver, to reduce a possibility that an accident occurs on the moving carrier because the driver misses the takeover reminder sent in the cockpit, and improve effectiveness and timeliness of transferring the takeover reminder information. In this way, safety of the moving carrier is improved.

With reference to the second aspect, in some implementations of the second aspect, the apparatus further includes a first detection unit, where when the first detection unit detects that the driver pays attention to the mobile terminal, the communication unit is specifically configured to send the first prompt information to the mobile terminal.

In this application, when the driver is not in the loop and the driver pays attention to the mobile terminal, the mobile terminal and the prompt apparatus of the cockpit send the takeover reminder at the first time, so that when the driver pays attention to the mobile terminal, missing of the takeover reminder displayed on the takeover reminding apparatus of the cockpit can be prevented, and effectiveness of sending the takeover reminder and timeliness of receiving the takeover reminder by the driver can be improved. In this way, safety of the moving carrier is improved.

In some possible implementations, when the first detection unit detects that the driver pays attention to the mobile terminal, the communication unit is configured to send the first prompt information to the mobile terminal in a first hierarchical reminder mode of the mobile terminal.

For example, the first hierarchical reminder mode of the mobile terminal includes a first-level reminder of the mobile terminal, a second-level reminder of the mobile terminal, and a third-level reminder of the mobile terminal. The first-level reminder of the mobile terminal may include a display reminder of the mobile terminal. The second-level reminder of the mobile terminal may include a display reminder and a sound reminder of the mobile terminal, or include a display reminder and a vibration reminder of the mobile terminal. The three-level reminder of the mobile terminal includes a display reminder, a sound reminder, and a vibration reminder of the mobile terminal.

In some possible implementations, when the driver status indicates that the driver is not in the loop, and the first detection unit does not detect that the driver pays attention to the mobile terminal, the communication unit is configured to send the first prompt information to the mobile terminal in a second hierarchical reminder mode of the mobile terminal.

For example, the second-level reminder mode of the mobile terminal includes a first-level reminder of the mobile terminal, a second-level reminder of the mobile terminal, and a third-level reminder of the mobile terminal. The first-level reminder of the mobile terminal may include a vibration reminder of the mobile terminal or a sound reminder of the mobile terminal. The second-level reminder of the mobile terminal may include a vibration reminder and a sound reminder of the mobile terminal. The three-level reminder of the mobile terminal includes a display reminder, a sound reminder, and a vibration reminder of the mobile terminal.

In this application, when the driver is not in the loop and it is not detected that the driver pays attention to the mobile terminal, the takeover reminder is sent on a takeover reminding apparatus of the mobile terminal in the vibration manner or the sound manner, so that when the driver does not pay attention to the mobile terminal and the driver is not in the loop, a possibility of missing the takeover reminder can be reduced, and effectiveness of sending the takeover reminder and timeliness of receiving the takeover reminder by the driver are further improved. In this way, safety of the moving carrier is improved.

With reference to the second aspect, in some implementations of the second aspect, the control unit is configured to control, based on duration in which the driver is not in the loop, the prompt apparatus to prompt the driver to take over the moving carrier.

In some possible implementations, the control unit is configured to control, based on a level of the duration in which the driver is not in the loop, the prompt apparatus to prompt, in a hierarchical reminder mode of the cockpit, the driver to take over the moving carrier.

For example, when the duration in which the driver is not in the loop reaches a first threshold (for example, 15s), a display apparatus of the cockpit is controlled to prompt, through a first-level reminder of the cockpit, the driver to take over the moving carrier. If the driver does not take over the moving carrier under the first-level reminder of the cockpit, when the duration in which the driver is not in the loop accumulates to a second threshold (for example, 30s), a display apparatus and a sound-making apparatus of the cockpit are controlled to prompt, through a second-level reminder of the cockpit, the driver to take over the moving carrier. If the driver does not take over the moving carrier under the second-level reminder of the cockpit, when the duration in which the driver is not in the loop accumulates to a third threshold (for example, 50s), the display apparatus, the sound-making apparatus, and a seat belt vibration apparatus of the cockpit are controlled to prompt, through a third-level reminder of the cockpit, the driver to take over the moving carrier.

With reference to the second aspect, in some implementations of the second aspect, the apparatus further includes a second detection unit. When the driver status indicates that the driver is not in the loop, and the second detection unit detects that an emergency event occurs, the control unit is configured to control the prompt apparatus to prompt the driver to take over the moving carrier.

In some possible implementations, the control unit is specifically configured to: after the emergency event is detected, control a display apparatus to prompt, through a first-level reminder of the cockpit, the driver to take over the moving carrier, and if the driver does not take over the moving carrier under the first-level reminder of the cockpit, control, based on a level of the duration in which the driver is not in the loop, the prompt apparatus to prompt, in a hierarchical reminder mode of the cockpit, the driver to take over the moving carrier.

For example, if the driver does not take over the moving carrier in a first-level reminder mode of the cockpit, and the duration in which the driver is not in the loop reaches a fourth threshold (for example, 20s), a display apparatus and a sound-making apparatus of the cockpit are controlled to prompt, through a second-level reminder of the cockpit, the driver to take over the moving carrier. If the driver does not take over the moving carrier under the second-level reminder of the cockpit, when the duration in which the driver is not in the loop accumulates to a fifth threshold (for example, 35s), the display apparatus, the sound-making apparatus, and a seat belt vibration apparatus of the cockpit are controlled to prompt, through a third-level reminder of the cockpit, the driver to take over the moving carrier.

In this application, when the driver is not in the loop, if the first-level reminder of the cockpit is triggered through the emergency event, the prompt apparatus may be controlled, based on the level of the duration in which the driver not in the loop, to prompt the driver to take over the moving carrier, so that takeover reminder information can be effectively transferred to the driver in time. In this way, traveling safety is improved.

With reference to the second aspect, in some implementations of the second aspect, the determining unit is further configured to: before the prompt apparatus is controlled to prompt the driver to take over the moving carrier, determine that a traveling speed of the moving carrier is greater than or equal to a speed threshold.

In this application, the traveling speed of the moving carrier is used as a factor to be considered for triggering the takeover reminder, so that traveling safety and user experience can be further improved. For example, when an autonomous driving system enables an autonomous parking function, the driver may take off the hand and get out of the eyes. In this case, the speed of the moving carrier is less than the speed threshold. Unless the emergency occurs, the driver does not receive the takeover reminder information. In this way, user experience can be improved.

With reference to the second aspect, in some implementations of the second aspect, the control unit controls the prompt apparatus to prompt the driver to take over the moving carrier, and synchronously, the communication unit sends the first prompt information to the mobile terminal.

With reference to the second aspect, in some implementations of the second aspect, the apparatus further includes a recording unit, where the recording unit is configured to record a response parameter indicating that the driver takes over the moving carrier. The communication unit is further configured to send the response parameter to a cloud server, where the response parameter is used to determine a driving behavior score of the driver, and the driving behavior score is used to evaluate behavior safety of the driver. The communication unit is further specifically configured to receive customization information from the cloud server, where the customization information is determined based on the driving behavior score.

In this application, when a result indicating that the driver is not in the loop is obtained through data collected by a driver monitoring apparatus of the cockpit and the data collected by the mobile terminal, a driver reminder sent based on the result is more accurate, so that the response parameter of the driver taking over the moving carrier is recorded more accurately. In this way, accuracy of subsequent information push is improved.

According to a third aspect, a driver reminding apparatus is provided. The apparatus includes at least one processor and an interface circuit. The processor communicates with a prompt apparatus through the interface circuit. The at least one processor is configured to perform the method according to any one of the first aspect, to control the prompt apparatus.

In some possible implementations, the prompt apparatus may be at least one of a display apparatus, a sound-making apparatus (for example, a speaker), a seat belt vibration apparatus, and an atmosphere light.

In some possible implementations, the display apparatus may include a vehicle-mounted display or a projection display.

According to a fourth aspect, a driver reminding apparatus is provided. The apparatus includes a processing unit and a storage unit. The storage unit is configured to store instructions, and the processing unit executes the instructions stored in the storage unit, so that the apparatus performs any possible method according to the first aspect.

Optionally, the processing unit may include at least one processor, and the storage unit may be a memory. The memory may be a storage unit (for example, a register or a cache) in a chip, or may be a storage unit (for example, a read-only memory, or a random access memory) located outside a chip in a moving carrier.

According to a fifth aspect, a driver reminding system is provided. The driver reminding system includes a computing platform and a prompt apparatus. The computing platform includes the apparatus according to any one of the second aspect, the third aspect, or the fourth aspect.

In some possible implementations, the prompt apparatus may be at least one of a display apparatus, a sound-making apparatus (for example, a speaker), a seat belt vibration apparatus, and an atmosphere light.

According to a sixth aspect, a moving carrier is provided. The moving carrier includes the apparatus according to any one of the second aspect, the third aspect, or the fourth aspect, or the moving carrier includes the driver reminding system according to the fifth aspect.

With reference to the sixth aspect, in some implementations of the sixth aspect, the moving carrier is a vehicle.

According to a seventh aspect, a computer program product is provided, where the computer program product includes computer program code. When the computer program code is run on a computer, the computer is enabled to perform any possible method according to the first aspect.

It should be noted that all or some of the computer program code may be stored in a first storage medium. The first storage medium may be packaged together with a processor, or may be packaged separately from a processor. This is not specifically limited in embodiments of this application.

According to an eighth aspect, a computer-readable medium is provided, where the computer-readable medium stores program code. When the computer program code is run on a computer, the computer is enabled to perform any possible method according to the first aspect.

According to a ninth aspect, an embodiment of this application provides a chip system. The chip system includes a processor configured to invoke a computer program or computer instructions stored in a memory, so that the processor performs any possible method according to the first aspect.

With reference to the ninth aspect, in a possible implementation, the processor is coupled to the memory through an interface.

With reference to the ninth aspect, in a possible implementation, the chip system further includes the memory. The memory stores the computer program or the computer instructions.

### BRIEF DESCRIPTION OF DRAWINGS

FIG. 1 is a functional block diagram of a moving carrier according to an embodiment of this application;
FIG. 2 is a schematic flowchart of a driver reminding method according to an embodiment of this application;
FIG. 3 is a diagram of an interaction procedure in which a mobile terminal accesses a moving carrier according to an embodiment of this application;
FIG. 4A and FIG. 4B are a diagram of a connection between a mobile terminal and an in-vehicle cockpit digital platform according to an embodiment of this application;
FIG. 5(a) to FIG. 5(c) are another diagram of a connection between a mobile terminal and an in-vehicle cockpit digital platform according to an embodiment of this application;
FIG. 6 is another diagram of a connection between a mobile terminal and an in-vehicle cockpit digital platform according to an embodiment of this application;
FIG. 7 is an interaction diagram of a driver reminding method according to an embodiment of this application;
FIG. 8 is a diagram of a hierarchical reminder mode of the cockpit according to an embodiment of this application;
FIG. 9 is a diagram of a hierarchical reminder mode of a mobile terminal according to an embodiment of this application;
FIG. 10 is an interaction diagram of another driver reminding method according to an embodiment of this application;
FIG. 11 is a diagram of a driving behavior evaluation method based on a driver reminding record according to an embodiment of this application;
FIG. 12 is a diagram of a procedure of sending driver reminder information according to an embodiment of this application;
FIG. 13(a)-1 to FIG. 13(c) are a diagram of man-machine interaction between driver reminder information of a cockpit and driver reminder information of a mobile terminal according to an embodiment of this application;
FIG. 14 is a diagram of a driver reminding apparatus according to an embodiment of this application; and
FIG. 15 is a diagram of a hardware structure of a driver reminding apparatus according to an embodiment of this application.

### DESCRIPTION OF EMBODIMENTS

The following describes technical solutions of embodiments in this application with reference to accompanying drawings. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists.

In embodiments of this application, prefixes such as "first" and "second" are used only to distinguish different described objects, and do not limit a location, a sequence, a priority, a quantity, or content of described objects. In embodiments of this application, use of a prefix word, for example, an ordinal number, used to distinguish between described objects does not constitute a limitation on the described objects. For descriptions of the described objects, refer to the descriptions of the context in the claims or embodiments. The use of such a prefix word should not constitute a redundant limitation. In addition, in the descriptions of embodiments, unless otherwise specified, "a plurality of" means two or more.

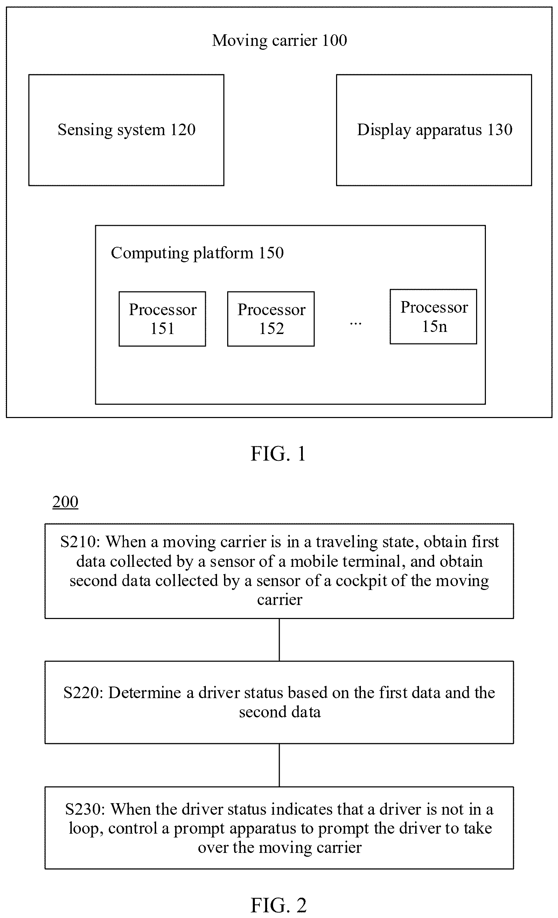

FIG. 1 is a functional block diagram of a moving carrier 100 according to an embodiment of this application. The moving carrier 100 may include a sensing system 120, a display apparatus 130, and a computing platform 150. The sensing system 120 may include several sensors that sense information about an ambient environment of the moving carrier 100. For example, the sensing system 120 may include a positioning system, and the positioning system may be a global positioning system (global positioning system, GPS), or may be a BeiDou system or another positioning system, or an inertial measurement unit (inertial measurement unit, IMU). The sensing system 120 may further include one or more of a lidar, a millimeter-wave radar, an ultrasonic radar, and a camera apparatus.

Some or all functions of the moving carrier 100 may be controlled by the computing platform 150. The computing platform 150 may include one or more processors, for example, processors 151 to 15n (where n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors 151 to 15n may invoke the instructions in the memory to execute the instructions, to implement a corresponding function.

The moving carrier in this application may include a road transportation means, a water transportation means, an air transportation means, an industrial device, an agricultural device, an entertainment device, or the like. For example, the moving carrier may be a vehicle. The vehicle is a vehicle in a broad sense, and may be a transportation means (for example, a commercial vehicle, a passenger vehicle, a motorcycle, a flight vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), a recreation device, a toy vehicle, or the like. A type of the vehicle is not limited in embodiments of this application. For another example, the moving carrier may be a transportation means, for example, an airplane or a ship. The following uses an example in which the moving carrier is a vehicle for description.

A display apparatus 130 of a cockpit of the moving carrier is mainly classified into two types. A first type is a vehicle-mounted display, and a second type is a projection display, for example, a head-up display (head-up display, HUD). The vehicle-mounted display is a physical display, and is an important part of an in-vehicle infotainment system. A plurality of displays may be disposed in the cockpit, for example, a digital dashboard display, a central display, a display in front of a passenger in a front passenger seat (also referred to as a front-row passenger), a display in front of a rear-seat passenger on the left, and a display in front of a rear-seat passenger on the right. Even a window may be used as a display for display. Head-up display is also referred to as a head-up display system. The head-up display is mainly configured to display driving information, for example, a speed and navigation on a display device (for example, a windshield) in front of a driver, to reduce gaze transfer time of the driver, avoid a pupil change caused by gaze transfer of the driver, and improve traveling safety and comfort. The HUD includes, for example, a combiner head-up display (combiner-HUD, C-HUD) system, a windshield head-up display (windshield-HUD, W-HUD) system, and an augmented reality head-up display (augmented reality HUD, AR-HUD) system. In some possible implementations, the vehicle-mounted display may include a human machine interface (human machine interface, HMI).

Before specific solutions in embodiments of this application are specifically described, for ease of understanding, terms in embodiments of this application are first explained as follows.
1. Driver monitor system (driver monitor system, DMS)
   The driver monitor system is configured to monitor a status of a driver, to prevent a behavior that endangers a driving process, for example, driver fatigue and distraction.
2. Operation design domain ODD

The operation design domain is an external condition for normal and safe driving of an autonomous vehicle, for example, a road type, a driving area, a speed, and an environment (for example, weather, daytime/nighttime).

Autonomous driving is still developing and cannot cover all driving scenarios. Therefore, the ODD is an operation limitation condition used to start an autonomous driving system. If an external environment in which the vehicle travels does not meet the ODD, that is, exceeds the ODD set by the autonomous driving system, the autonomous driving system may send a driver reminder, so that the driver can take over the vehicle in time, to prevent an accident.

### 3. Minimum risk maneuver (minimum risk maneuver, MRM)

The minimum risk maneuver is a solution path that is used to minimize a risk and that is used when a system failure (a fault that causes the system not to work) occurs in the autonomous driving system or when the original ODD of the system is exceeded, to ensure safety of the autonomous vehicle in a running process. This strategy can be automatically executed when the autonomous driving system requires manual takeover without response, or when the vehicle is at a serious collision risk or faulty.

Autonomous driving is classified into different levels: an L0 level indicating no automation, an L1 level indicating driving support, an L2 level indicating partial automation, an L3 level indicating conditional automation, an L4 level indicating high automation, and an L5 level indicating full automation. Tasks of monitoring and responding to a road condition at the L1 level to the L3 level are jointly completed by the driver and the system, and the driver needs to take over a dynamic driving task. In a broad sense, L1 level to L3 level autonomous driving belongs to a human-machine co-driving phase. The L4 and L5 levels can enable the driver to be completely transformed into a passenger.

Although autonomous driving is classified into different levels, the driver needs to take over the vehicle in time in the following cases, to prevent accidents. For example, the autonomous driving system is faulty, the vehicle driving condition is outside the ODD, or the vehicle is in an emergency.

Currently, most display reminders in the driver monitor system and a hierarchical reminder system are based on the vehicle-mounted display apparatus 130. When autonomous driving is at a level below the L3 level, the autonomous driving system may be actually considered as a driver assistance system to assist the driver in a driving operation, and the driver is still a main operator and a responsible person of the driving task. Therefore, the driver assistance system below the L3 level does not allow the driver to be in a hand-free and eye-free state. In other words, the driver is in an in-loop state in the entire driving process. Therefore, when the current driver monitor system detects that the driver is in an out-of-loop state, the hierarchical reminder system sends a driver reminder. In terms of visual, acoustic, and tactile senses, hierarchical takeover reminders are respectively implemented by using a display apparatus, a sound-making apparatus (for example, a speaker), and a safety belt.

With development of autonomous driving technologies, after an ADS system is activated, due to impact of factors such as physiological and psychological factors, the driver cannot always pay attention to a display apparatus of a cockpit, and the driver may be using a mobile terminal, for example, a mobile terminal like a smartphone, a tablet computer, a smart band, or a smart watch. If an emergency occurs in this case, when the driver monitor system detects that the driver is in the out-of-loop state, the hierarchical reminder system needs to send driver reminder information. Because the driver does not pay attention to the driving task, based on a current manner in which the display apparatus of the cockpit displays a reminder, the driver may miss an optimal moment for receiving a takeover display reminder. Consequently, a potential traffic accident is caused.

To resolve the foregoing problem, embodiments of this application provide a driver reminding method, apparatus, and system, and a vehicle, to reduce a risk that the driver misses the optimal moment for receiving the takeover display reminder. This improves traveling safety of autonomous driving.

FIG. 2 is a schematic flowchart of a driver reminding method 200 according to an embodiment of this application. As shown in FIG. 2, the method 200 may be performed by a moving carrier (for example, a vehicle), or the method 200 may be performed by a system including a computing platform and a prompt apparatus, or the method 200 may be performed by a computing platform, the method 200 may be performed by a system-on-a-chip (system-on-a-chip, SOC) in a computing platform, or the method 200 may be performed by a processor in the computing platform. The method 200 includes the following steps.

S210: When a moving carrier is in a traveling state, obtain first data collected by a sensor of a mobile terminal, and obtain second data collected by a sensor of a cockpit of the moving carrier.

It should be understood that, when the moving carrier is in the traveling state, adaptive cruise control (adaptive cruise control, ACC) may be enabled for the moving carrier in a driving scenario, and functions such as lane centering control (lane centering control, LCC), navigation on autopilot (navigate on autopilot, NOA) may be enabled for the moving carrier. Functions such as an auto parking assist (auto parking assist, APA) function may further enable for the moving carrier in a parking scenario.

It should be noted that the sensor of the mobile terminal may be a camera apparatus, a screen touch sensing apparatus, or the like of the mobile terminal, and the sensor of the cockpit of the moving carrier may be a camera apparatus in a DMS system, where the camera apparatus may be installed at a position, for example, an inner rearview mirror, an A-pillar on a driving position side, or a steering wheel. This is not limited in this embodiment of this application.

For example, the mobile terminal may be a mobile terminal, for example, a smartphone, a tablet computer, a smart band, or a smartwatch.

S220: Determine a driver status based on the first data and the second data.

In a possible implementation, reliability of the first data and the second data is determined, and the driver status is determined based on reliable driving data. The reliable driving data may be the first data or the second data.

For example, when the sensor of the cockpit of the moving carrier tracks a line of sight of the driver, only one eye of the driver can be tracked. When the sensor of the mobile terminal tracks the line of sight of the driver, two eyes of the driver can be tracked. In this case, the first data from the sensor of the mobile terminal is more reliable. Conversely, the second data from the sensor of the cockpit of the moving carrier is more reliable.

In a possible implementation, the first data and the second data are fused to obtain the driver status.

Specifically, the first data and original data of the first data are fused to obtain the driver status, or a data result of the first data and a data result of the second data are fused to obtain the driver status.

It should be understood that the driver status may be that the driver is in the loop or the driver is not in the loop. That the driver is in the loop indicates that the driver pays attention to a driving task. That the driver is not in the loop may indicate that the driver does not pay attention to a driving task. For example, the driver has an abnormal driving behavior like distraction, fatigue, and use of the mobile terminal.

S230: When the driver status indicates that the driver is not in the loop, control the prompt apparatus to prompt the driver to take over the moving carrier.

In this embodiment of this application, the second data comes from the camera apparatus fixedly installed in the cockpit, and an installation position and an installation angle of the camera apparatus are fixed. Therefore, the camera apparatus of the cockpit may have an insufficient field of view (field of view, FOV) or be blocked. As a result, data collected by the camera apparatus of the cockpit is inaccurate, and a driver status obtained only based on the DMS is inaccurate. Therefore, in this embodiment of this application, the first data obtained by the mobile terminal can compensate for a disadvantage of the second data collected by the cockpit in terms of a field of view, and the driving status determined based on multivariable data can improve accuracy of determining the driver status. Based on the accurate driver status, a driver reminder sent due to false detection of a DMS can be prevented, and user experience can be improved. In addition, this can help send driver reminders by a plurality of devices, reduce a safety risk caused by missing the takeover reminder by the driver, and improve traveling safety.

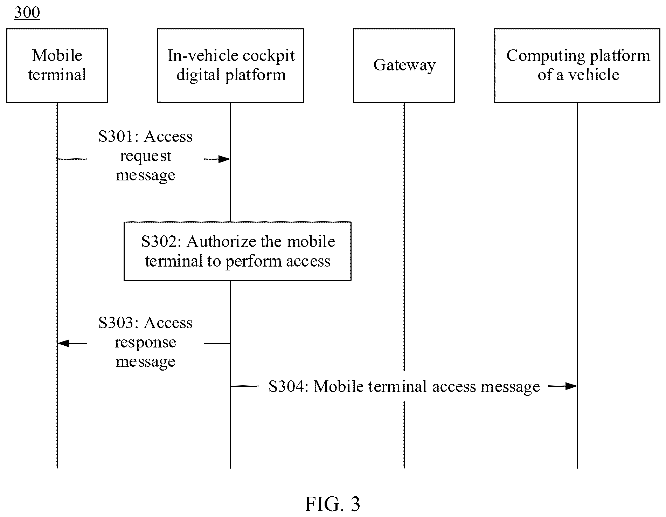

FIG. 3 is a diagram of an interaction procedure 300 in which a mobile terminal accesses a moving carrier according to an embodiment of this application.

S301: The mobile terminal sends an access request message to an in-vehicle cockpit digital platform.

In a possible implementation, the mobile terminal may send the access request message to the in-vehicle cockpit digital platform in a wireless communication manner. The wireless communication manner may be a manner like near field communication (near field communication, NFC), Bluetooth (Bluetooth), or Greentooth. This is not limited in this embodiment of this application.

For example, the in-vehicle cockpit digital platform may be a cockpit domain controller (cockpit domain controller, CDC).

S302: The in-vehicle cockpit digital platform authorizes the mobile terminal to perform access.

In a possible implementation, the in-vehicle cockpit digital platform determines, by using an information security mechanism and based on an identity document (identity document, ID) of a mobile terminal that requests access, whether the ID of the mobile terminal belongs to a mobile terminal corresponding to a registered trustlist user. If determining that the authentication succeeds, the in-vehicle cockpit digital platform receives the access request of the mobile terminal, and authorizes the mobile terminal to access. If determining that the authentication fails, the in-vehicle cockpit digital platform rejects the access request of the mobile terminal.

S303: The in-vehicle cockpit digital platform sends an access response message to the mobile terminal.

It should be understood that the in-vehicle cockpit digital platform may alternatively send the access response message to the mobile terminal in a wireless communication manner. A specific wireless communication manner is similar to that in S301.

S304: The in-vehicle cockpit digital platform sends a mobile terminal access message to a computing platform of a vehicle.

In a possible implementation, the in-vehicle cockpit digital platform sends the mobile terminal access message to the computing platform of the vehicle through a gateway.

It should be understood that the computing platform of the vehicle may be the computing platform 130 in FIG. 1, for example, may be a mobile data center (mobile data center, MDC).

In a possible implementation, if the computing platform of the vehicle has a wireless communication function, in an interaction procedure in which the mobile terminal accesses the vehicle, the mobile terminal may directly access the computing platform of the vehicle in a wireless communication manner.

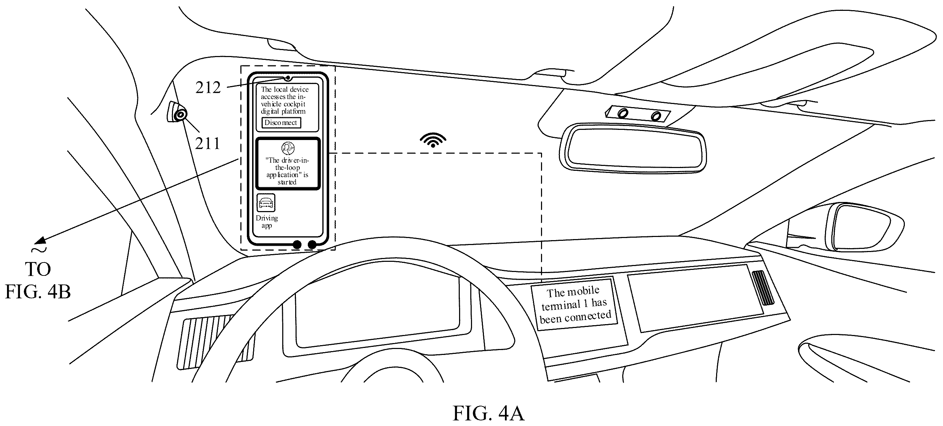

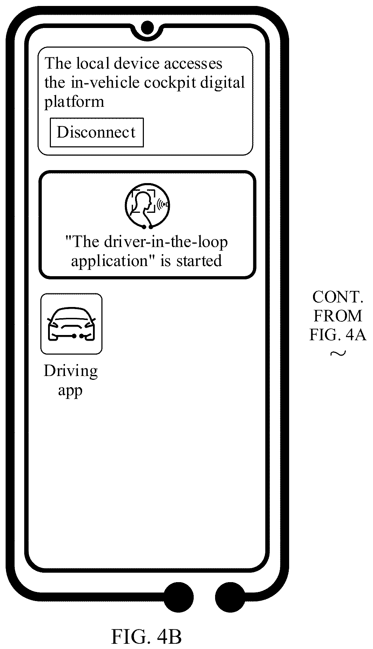

FIG. 4A and FIG. 4B are a diagram of a connection between a mobile terminal and an in-vehicle cockpit digital platform according to an embodiment of this application.

After the mobile terminal accesses the in-vehicle cockpit digital platform through the message exchange procedure shown in FIG. 3, a display apparatus of the in-vehicle cockpit digital platform displays pop-up window content: The mobile terminal has been connected. For example, as shown in FIG. 4A and FIG. 4B, a central display displays "The mobile terminal 1 has been connected", where the mobile terminal 1 may be a smartphone shown in FIG. 4A and FIG. 4B.

The mobile terminal displays pop-up window content "The local device accesses the in-vehicle cockpit digital platform" as shown in FIG. 4A and FIG. 4B. At the same time, a driver-in-the-loop application is started, and the mobile terminal displays pop-up window content: "The driver-in-the-loop application" is started, as shown in FIG. 4A and FIG. 4B.

For example, as shown in FIG. 4A and FIG. 4B, a sensor of the cockpit may be a camera apparatus of the cockpit, the camera apparatus of the cockpit is installed on an A-pillar on the driver side, and a sensor of the mobile terminal may be a front-facing camera of the smartphone. After the mobile terminal is connected to the in-vehicle cockpit digital platform, the camera apparatus of the cockpit is connected to a computing platform of a vehicle through an in-vehicle communication network, and the camera apparatus of the mobile terminal is connected to the computing platform of the vehicle through a wireless communication network. The in-vehicle communication network may be an in-vehicle serial bus, for example, a controller area network (controller area network, CAN) bus or a local interconnect network (local interconnect network, LIN) bus, or may be an in-vehicle Ethernet network. This is not limited in this embodiment of this application.

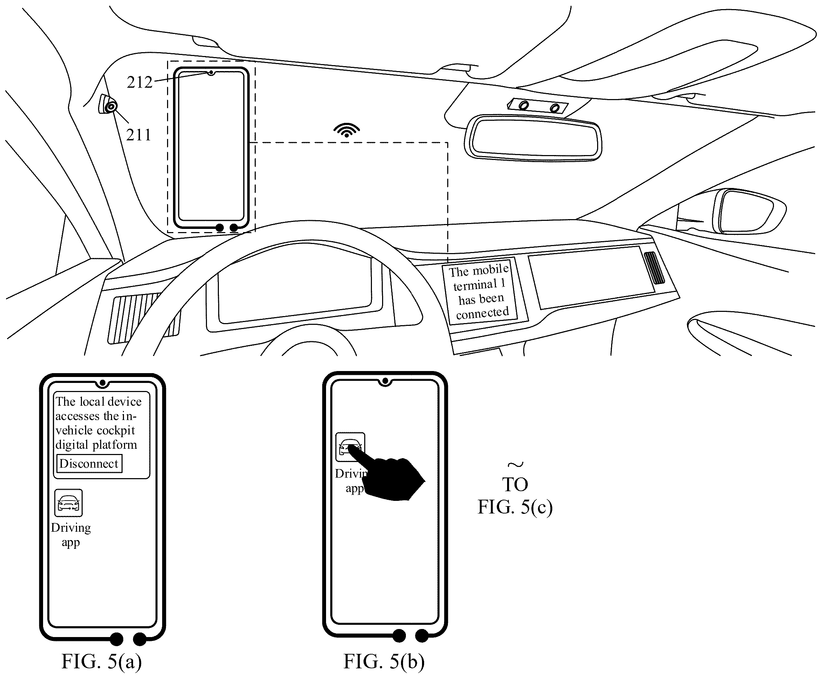

FIG. 5(a) to FIG. 5(c) are another diagram of a connection between a mobile terminal and an in-vehicle cockpit digital platform according to an embodiment of this application.

As shown in FIG. 5(a) to FIG. 5(c), after the mobile terminal accesses the in-vehicle cockpit digital platform through the message exchange procedure shown in FIG. 3, content displayed on a display apparatus of the in-vehicle cockpit digital platform is the same as that in FIG. 4A and FIG. 4B. For brevity, details are not described herein again. A dynamic display process of starting a driver-in-the-loop service of the mobile terminal is shown in FIG. 5(a) to FIG. 5(c).

As shown in FIG. 5(a), after the mobile terminal accesses the in-vehicle cockpit digital platform through the message exchange procedure shown in FIG. 3, the mobile terminal displays pop-up window content "The local device accesses the in-vehicle cockpit digital platform", as shown in FIG. 5(a).

As shown in FIG. 5(b), the mobile terminal starts a human-computer interaction application, for example, a driving application (application, APP), in response to a first operation.

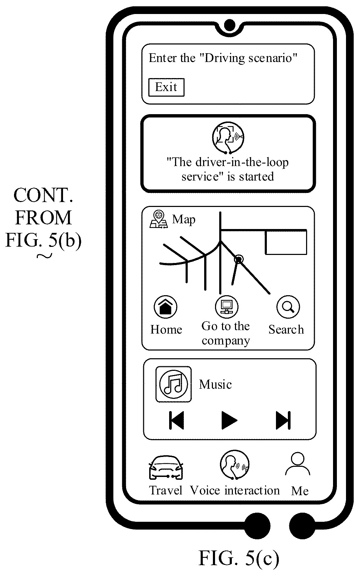

In an operation interface of a human-machine interconnection application shown in FIG. 5(c), after the human-machine interaction application is started, the mobile terminal displays pop-up window content: "The driver-in-the-loop service" is started.

It should be understood that information about starting "The driver-in-the-loop service" is pop-up window information, and the information automatically disappears after being displayed on the mobile terminal for a period of time. In this case, "The driver-in-the-loop service" runs in the background.

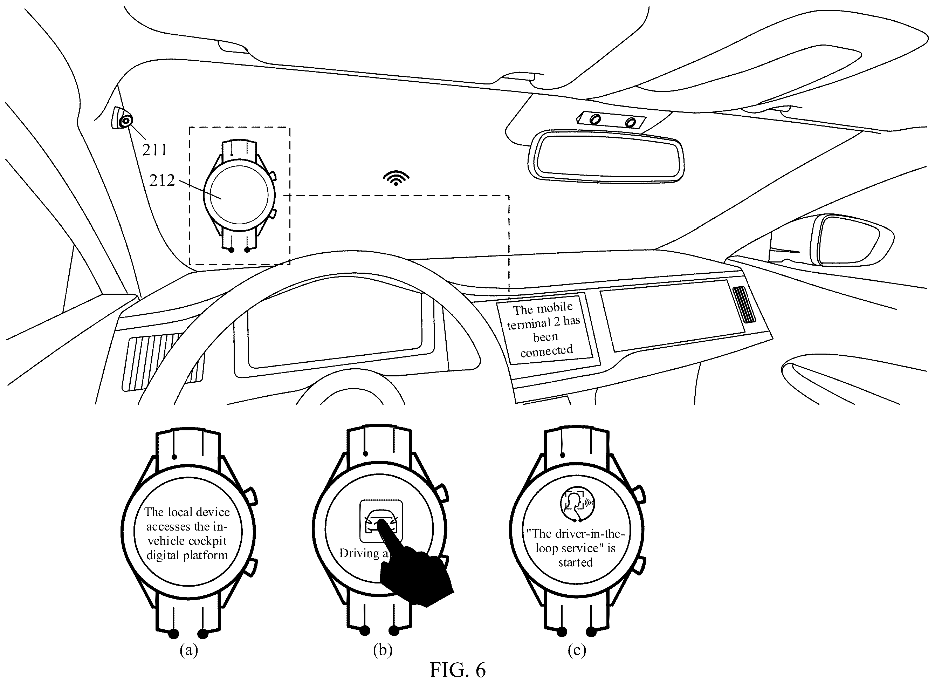

FIG. 6 is another diagram of a connection between a mobile terminal and an in-vehicle cockpit digital platform according to an embodiment of this application. When the mobile terminal has no camera apparatus, a status of using the mobile terminal by a driver may be monitored by using a screen touch sensing apparatus of the mobile terminal.

After the mobile terminal accesses the in-vehicle cockpit digital platform through the message exchange procedure shown in FIG. 3, a display apparatus of the in-vehicle cockpit digital platform displays pop-up window content: The mobile terminal has been connected. For example, as shown in FIG. 6, a central display displays "The mobile terminal 2 has been connected", where the mobile terminal 2 may be a smartwatch shown in FIG. 6. A dynamic display process of starting a driver-in-the-loop service of the mobile terminal is shown in (a) in FIG. 6 to (c) in FIG. 6. A process of dynamically starting the driver-in-the-loop service is the same as that in FIG. 5(a) to FIG. 5(c). For brevity, details are not described herein again.

An ADS system is activated, that is, the ADS system is in a running state, a DMS system of a cockpit is in a running state, and "The driver-in-the-loop service" of the mobile terminal is started.

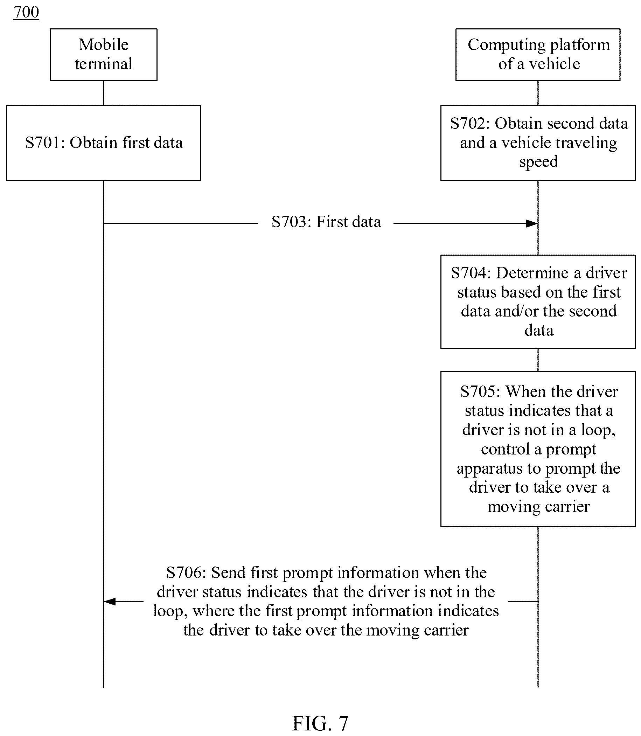

The following describes in detail the driver reminding method provided in embodiments of this application with reference to FIG. 7 to FIG. 13(c).

FIG. 7 is an interaction diagram of a driver reminding method 700 according to an embodiment of this application. As shown in FIG. 7, the method 700 includes the following steps.

S701: A mobile terminal obtains first data.

In a possible implementation, the first data is collected by using a camera apparatus of the mobile terminal, where the first data may be video stream data of a driver that is collected from a visual angle of a location of the mobile terminal.

In a possible implementation, the first data is collected by using a non-camera apparatus (for example, a screen touch sensing apparatus) of the mobile terminal, where the first data may be recorded data generated when a driver taps the mobile terminal.

S702: A computing platform of a vehicle obtains second data and a vehicle traveling speed.

In a possible implementation, the computing platform of the vehicle obtains the second data collected by a sensor of a moving carrier.

For example, the sensor of the moving carrier may be a camera apparatus of a cockpit. In this case, the second data may be data used by the camera apparatus of the cockpit to track a line of sight of the driver.

In a possible implementation, the computing platform of the vehicle obtains the traveling speed of a moving carrier through in-vehicle communication.

It should be understood that an execution sequence of the two steps S701 and S702 is not limited in this embodiment of this application.

S703: The computing platform of the vehicle obtains the first data of the mobile terminal.

In a possible implementation, the computing platform of the vehicle receives the first data from the mobile terminal in a wireless communication manner.

In a possible implementation, the mobile terminal sends the first data to an in-vehicle cockpit digital platform in the wireless communication manner, and then the in-vehicle cockpit digital platform sends the first data to the computing platform of the vehicle through an in-vehicle communication network.

It should be understood that the first data may reflect whether the driver pays attention to the mobile terminal.

It should be further understood that an execution sequence of the two steps S702 and S703 is not limited in this embodiment of this application.

S704: The computing platform of the vehicle determines a driver status based on the first data and/or the second data.

The driver status indicates that the driver is in the loop or the driver is not in the loop. If the driver is not in the loop, the driver status further indicates whether it is detected that the driver pays attention to the mobile terminal.

It should be understood that the driver status may be obtained by using the second data, or may be obtained by using the first data, or may be obtained by using the second data and the first data. As shown in Table 1, "1" indicates data used for the driver status, and "0" indicates data not used for the driver status.

**Table 1**

| | Method 1 | Manner 2 | Method 3 |
|---|---|---|---|
| Second data | 1 | 0 | 1 |
| First data | 0 | 1 | 1 |

Manner 1: The computing platform of the vehicle determines the driver status based on the second data.

For example, the second data is analyzed by using an artificial intelligence (artificial intelligent, AI) algorithm, to complete detection tasks such as driver liveness in-position detection, user ID account detection, head pose detection, and line-of-sight tracking detection. In this way, the driver status indicating whether the driver is in the loop is obtained.

A specific AI algorithm is not limited in this embodiment of this application. For example, the AI algorithm may be a convolutional neural network, a recurrent neural network, or an adversarial neural network.

It should be understood that, by completing the foregoing driver detection tasks, an abnormal driving behavior of the driver may be detected, for example, an abnormal behavior that the driver does not pay attention to a driving task, for example, fatigue, distraction, or long-time use of a mobile phone. When it is detected that the driver has the abnormal driving behavior, it may be considered that the driver status includes that the driver is not in the loop.

Manner 2: The computing platform of the vehicle determines the driver status based on the first data.

For example, when the first data is obtained by using the camera apparatus of the mobile terminal, a manner of processing the first data is similar to that of processing the second data. For brevity, details are not described herein again.

Manner 3: The computing platform of the vehicle determines the driver status based on the second data and the first data.

In a possible implementation, reliability of the first data and the second data is determined, and the driver status is determined based on reliable driving data. The reliable driving data may be the first data or the second data.

In a possible implementation, the computing platform of the vehicle fuses the second data and the first data to obtain the driver status.

The second data and the first data are fused by using an AI algorithm, to obtain the driver status.

For example, both the second data and the first data are video stream data. Lines of sight of the driver in the second data and the first data are analyzed according to an AI algorithm, to obtain whether the driver is in the loop. If the driver is not in the loop, whether the driver pays attention to the mobile terminal is further analyzed.

The driver status has the following several cases. In a first case, the driver is not in the loop, and it is detected that the driver pays attention to the mobile terminal. In a second case, the driver is not in the loop, and it is not detected that the driver pays attention to the mobile terminal. In a third case, the driver is in the loop.

The driver status is determined by combining a data result of the second data and a data result of the first data.

For example, a processing process of the second data is similar to that in Manner 1. For brevity, details are not described herein again.

For example, if the first data is obtained by using the camera apparatus of the mobile terminal, a manner of processing the first data is similar to that of processing the second data. For brevity, details are not described herein again.

For example, if the first data is obtained by using the screen touch sensing apparatus of the mobile terminal, whether the driver is in the loop may be determined by recording a screen touch time and a time length for which the driver operates the screen. For example, if the time length for which the driver operates the screen exceeds a threshold, it is determined that the driver is currently focusing on the mobile terminal, and the driver is not in the loop.

Specifically, the driver status is shown in Table 2.

**Table 2**

| | Case 1 | Case 2 | Case 3 |
|---|---|---|---|
| Data result corresponding to the second data collected by the sensor of the cockpit | Not in the loop | Not in the loop | In the loop |
| Data result corresponding to the first data collected by the sensor of the mobile terminal | Not in the loop | Whether the driver is in the loop is unknown | In the loop |
| Driver status | Not in the loop | Not in the loop | In the loop |

Case 1: If it is determined, based on the second data, that the driver status is not in the loop, and it is also determined, based on the first data, that the driver status is not in the loop, the driver status includes that the driver is not in the loop. In addition, it is detected that the driver pays attention to the mobile terminal.

For example, when the driver pays attention to the mobile terminal, for example, when the driver is viewing real-time information of the mobile terminal or attending a meeting, driving status data collected by the cockpit may reflect that the driver is in a distracted state, and the driver status obtained through collection of the mobile terminal may also reflect that the driver is not in the loop.

Case 2: If it is determined, based on the second data, that the driver status is not in the loop, and it is determined, based on the first data, that the driver status is unknown whether the driver is in the loop, the driver status includes that the driver is not in the loop. In addition, it is not detected that the driver pays attention to the mobile terminal.

It should be noted that a result that indicates whether the driver is in the loop is unknown and that is obtained by using the first data means that the driver does not pay attention to the mobile terminal, and whether the driver is in the loop cannot be determined by using the data collected by the sensor of the mobile terminal.

For example, the first data collected by the sensor of the mobile terminal may be a record of operating the mobile terminal by the driver. The record may include a data type: whether the driver operates the mobile terminal; and a data return value: 0 or 1, where "0" may indicate that the driver does not operate the mobile terminal, and "1" may indicate that the driver operates the mobile terminal. When the data return value is 1, the record further includes duration in which the driver operates the mobile terminal.

For another example, the first data collected by the sensor of the mobile terminal may be line-of-sight tracking data of the driver. When the driver does not pay attention to the mobile terminal, the line-of-sight tracking data of the driver indicates that it is not detected that the driver pays attention to the mobile terminal.

For example, when the data return value in the record of operating the mobile terminal by the driver is 0 or when the first data indicates that the eyes of the driver are not gazing at the mobile terminal, it is determined that the driver status is unknown whether the driver is in the loop.

A scenario corresponding to the case 2 may be as follows. It may be determined, by using the driving status data collected by the cockpit, that the driver has the abnormal behavior like fatigue or distraction, that is, the driver is not in the loop, but it is determined, by using the driving status data collected by the mobile terminal, that the driver is in the loop, that is, the driver does not operate the mobile terminal.

Case 3: If it is determined, based on the second data, that the driver status is in-loop, and it is also determined, based on the first data, that the driver status is in-loop, the driver status indicates that the driver is in the loop.

S705: When the driver status indicates that the driver is not in the loop, the computing platform of the vehicle controls a prompt apparatus to prompt the driver to take over the moving carrier.

In a possible implementation, the computing platform of the vehicle controls, based on duration in which the driver is not in the loop, the prompt apparatus to prompt the driver to take over the moving carrier.

Specifically, when the driver status includes that the driver is not in the loop, and the duration in which the driver is not in the loop is greater than or equal to a first threshold, the computing platform of the vehicle controls the prompt apparatus to prompt the driver to take over the moving carrier. For example, when the duration in which the driver is not in the loop exceeds 15 seconds, the computing platform of the vehicle controls the prompt apparatus to prompt the driver to take over the moving carrier.

In a possible implementation, when the driver status indicates that the driver is not in the loop and an emergency event is detected, the computing platform of the vehicle controls the prompt apparatus to prompt the driver to take over the moving carrier.

Specifically, the emergency event may be an emergency event such as an ADS fault or a vehicle driving condition outside an ODD, or an emergency event that occurs on a driving vehicle.

For example, when the duration in which the driver is not in the loop does not reach the first threshold, after it is detected that the emergency event occurs, the computing platform of the vehicle controls the prompt apparatus to prompt the driver to take over the moving carrier.

It should be understood that the prompt apparatus may be located in the cockpit, for example, a display apparatus, a sound-making apparatus (for example, a speaker), an atmosphere light, or a seat belt vibration apparatus of the cockpit. This is not limited in this embodiment of this application.

In a possible implementation, before the computing platform of the vehicle controls the prompt apparatus to prompt the driver to take over the moving carrier, it is determined that the traveling speed of the moving carrier is greater than or equal to a speed threshold. The speed threshold may be 10 km/h or another value. This is not limited in this embodiment of this application.

In this embodiment of this application, the traveling speed of the moving carrier is used as a factor to be considered for triggering the takeover reminder, so that traveling safety and user experience can be further improved. For example, when an autonomous driving system enables an autonomous parking function, the driver may take off the hand and get out of the eyes. In this case, the speed of the moving carrier is less than the speed threshold. Unless the emergency occurs, the driver does not receive the takeover reminder information. In this way, user experience can be improved.

In a possible implementation, the computing platform of the vehicle controls, in a hierarchical reminder mode of the cockpit, the prompt apparatus to prompt the driver to take over the moving carrier.

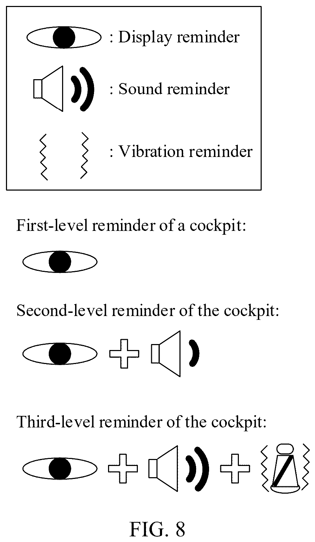

FIG. 8 is a diagram of a hierarchical reminder mode of a cockpit according to an embodiment of this application.

As shown in FIG. 8, the hierarchical reminder mode of the cockpit may include a first-level reminder of the cockpit, a second-level reminder of the cockpit, and a third-level reminder of the cockpit. The first-level reminder of the cockpit includes a display reminder of the cockpit. The second-level reminder of the cockpit includes a display reminder and a sound reminder of the cockpit. The third-level reminder of the cockpit includes a display reminder, a sound reminder, and a vibration reminder of the cockpit.

S706: When a driver status indicates that the driver is not in the loop, the computing platform of the vehicle sends first prompt information to the mobile terminal, where the first prompt information indicates the driver to take over the moving carrier.

In this embodiment of this application, the mobile terminal and the takeover prompt apparatus of the cockpit collaboratively send the takeover reminder information to the driver, to reduce a possibility that an accident occurs on the vehicle because the driver misses the takeover reminder sent in the cockpit, and improve effectiveness and timeliness of transferring the takeover reminder information. In this way, safety of the vehicle is improved.

In a possible implementation, the computing platform of the vehicle sends the first prompt information to the mobile terminal based on the duration in which the driver is not in the loop.

In a possible implementation, when the driver status indicates that the driver is not in the loop and an emergency event is detected, the computing platform of the vehicle sends the first prompt information to the mobile terminal.

In a possible implementation, when the driver status indicates that the driver is not in the loop, and it is detected that the driver pays attention to the mobile terminal, the first prompt information is sent to the mobile terminal.

In a possible implementation, the computing platform of the vehicle sends the first prompt information to the mobile terminal in a hierarchical reminder mode of the mobile terminal.

Specifically, when it is detected that the driver pays attention to the mobile terminal, the computing platform of the vehicle sends the first prompt information to the mobile terminal in a first hierarchical reminder mode of the mobile terminal.

In this embodiment of this application, when the driver is not in the loop and the driver pays attention to the mobile terminal, the mobile terminal and the prompt apparatus of the cockpit send the takeover reminder at the first time, so that when the driver pays attention to the mobile terminal, missing of the takeover reminder displayed on the takeover reminding apparatus of the cockpit can be prevented, and effectiveness of sending the takeover reminder and timeliness of receiving the takeover reminder by the driver can be improved. In this way, safety of the vehicle is improved.

Optionally, when it is not detected that the driver pays attention to the mobile terminal, the computing platform of the vehicle sends the driver reminder information to the mobile terminal in a second hierarchical reminder mode of the mobile terminal.

In this embodiment of this application, when the driver is not in the loop and it is not detected that the driver pays attention to the mobile terminal, the takeover reminder is sent on a takeover reminding apparatus of the mobile terminal in a vibration manner or a sound manner, so that when the driver does not pay attention to the mobile terminal and the driver is not in the loop, a possibility of missing the takeover reminder may be reduced, and effectiveness of sending the takeover reminder and timeliness of receiving the takeover reminder by the driver are further improved. In this way, safety of the vehicle is improved. For example, if the driver status indicates that the driver is not in the loop, and the driver has an abnormal behavior like fatigue or distraction, but the driver does not operate the mobile terminal, the driver may not receive the takeover reminder information in time by relying only on the display reminder of the cockpit, so that a vibration reminder or a sound reminder of the mobile terminal is additionally used to improved timeliness and effectiveness of receiving the takeover reminder by the driver. In this way, safety of the vehicle is improved.

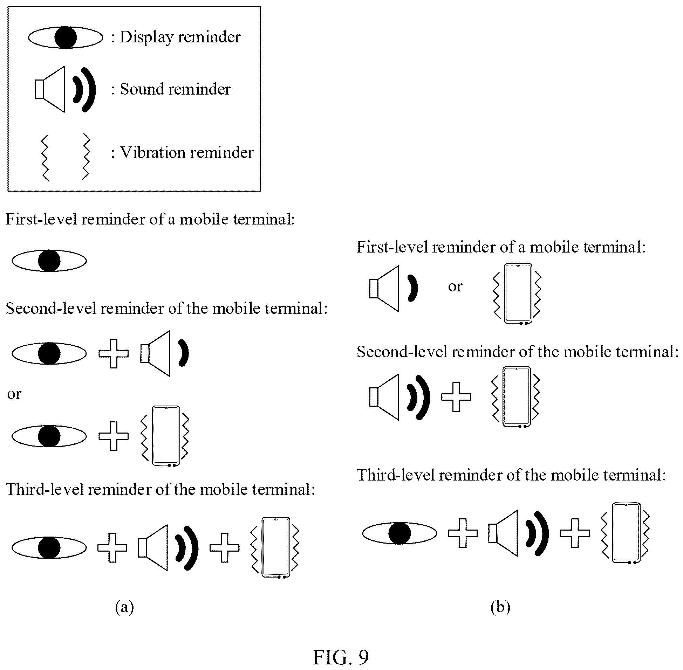

FIG. 9 is a diagram of a hierarchical reminder mode of a mobile terminal according to an embodiment of this application.

As shown in (a) in FIG. 9, a first-level reminder mode of the mobile terminal includes a first-level reminder of the mobile terminal, a second-level reminder of the mobile terminal, and a third-level reminder of the mobile terminal. The first-level reminder of the mobile terminal may include a display reminder of the mobile terminal. The second-level reminder of the mobile terminal may include a display reminder and a sound reminder of the mobile terminal, or include a display reminder and a vibration reminder of the mobile terminal. The three-level reminder of the mobile terminal includes a display reminder, a sound reminder, and a vibration reminder of the mobile terminal.

As shown in (b) in FIG. 9, a second-level reminder mode of the mobile terminal includes a first-level reminder of the mobile terminal, a second-level reminder of the mobile terminal, and a third-level reminder of the mobile terminal. The first-level reminder of the mobile terminal may include a vibration reminder of the mobile terminal or a sound reminder of the mobile terminal. The second-level reminder of the mobile terminal may include a vibration reminder and a sound reminder of the mobile terminal. The three-level reminder of the mobile terminal includes a display reminder, a sound reminder, and a vibration reminder of the mobile terminal.

It should be understood that the sound reminder may be a voice reminder including specific prompt content, for example, a voice reminder of "Take over the vehicle", or may be a sound reminder without specific prompt content, for example, a sound reminder of "di-di". A type of the sound reminder is not limited in this embodiment of this application.

It should be further understood that the sound reminder in the second-level reminder may be stronger than the sound reminder in the first-level reminder. For example, if the voice reminder includes specific content, volume of the voice reminder may be increased; or if the voice reminder does not include specific content, a frequency of the voice reminder may be increased, and the short sound "di-di" is changed to a rapid sound "didi-didi".

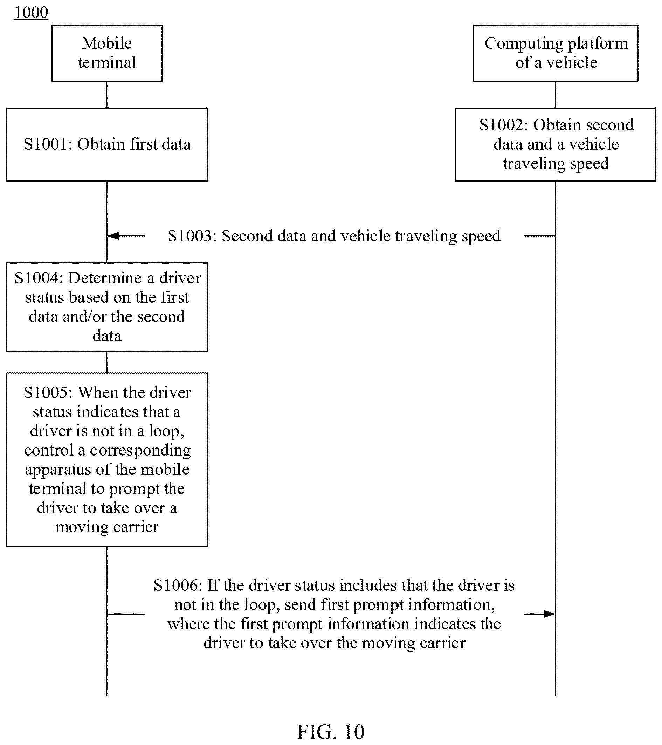

FIG. 10 is an interaction diagram of another driver reminding method 1000 according to an embodiment of this application. The method 1000 includes the following steps.

S1001: A mobile terminal obtains first data.

It should be noted that S1001 is similar to S701. For details, refer to S701.

S1002: A computing platform of a vehicle obtains second data and a vehicle traveling speed.

It should be noted that S1002 is similar to S702. For details, refer to S702.

S1003: The mobile terminal obtains the second data and the vehicle traveling speed of the computing platform of the vehicle.

In a possible implementation, the mobile terminal obtains the second data from the computing platform of the vehicle in a wireless communication manner.

S1004: The mobile terminal determines a driver status based on the first data and/or the second data.

It should be noted that a process in which the mobile terminal determines the driver status in S1004 is similar to a process in which the computing platform of the vehicle determines the driver status in S704. For details, refer to S704.

S1005: When the driver status indicates that a driver is not in a loop, the mobile terminal controls a corresponding apparatus of the mobile terminal to prompt the driver to take over a moving carrier.

It should be noted that a process in which the mobile terminal controls the corresponding apparatus of the mobile terminal to prompt the driver to take over the moving carrier in S1005 is similar to a process in which the computing platform of the vehicle controls the prompt apparatus to prompt the driver to take over the moving carrier in S705. For details, refer to S705.

S1006: If the driver status includes that the driver is not in the loop, the mobile terminal sends first prompt information to the computing platform of the vehicle, where the first prompt information indicates the driver to take over the moving carrier.

It should be noted that for specific steps in S1006, reference may be made to S706.

In a possible implementation, a process of determining the driver status may be implemented by a cloud server. The cloud server sends the driver status to the computing platform of the vehicle, and the computing platform of the vehicle controls the prompt apparatus to prompt the driver to take over the vehicle and sends the first prompt information to the mobile terminal.

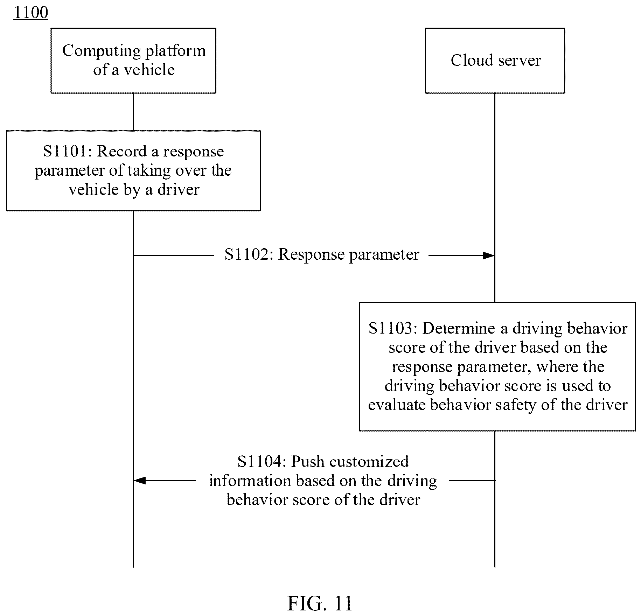

FIG. 11 is a diagram of a driving behavior evaluation method 1100 based on a driver reminding record according to an embodiment of this application.

S1101: A computing platform of a vehicle records a response parameter of taking over the vehicle by a driver.

It should be understood that the response parameter includes a quantity of takeover reminders in a driving task and a corresponding takeover reminder level when the driver takes over the vehicle in each takeover reminder.

It should be understood that a takeover reminding manner is implemented in the manner shown in FIG. 7 in embodiments of this application.

For example, a driving task may be a normal driving task from a place A to a place B, or may be an automatic parking task.

The quantity of takeover reminders indicates a quantity of times that the driver is not in a loop in one driving task. A larger quantity of takeover reminders indicates a larger quantity of times that the driver is in an abnormal driving behavior state, that is, a more dangerous driving behavior of the driver.

When the driver takes over the vehicle, a higher corresponding takeover reminding level indicates a longer reaction time for the driver to take over the vehicle, that is, a more dangerous driving behavior of the driver.

S1102: The computing platform of the vehicle sends the response parameter to a cloud server.

S1103: The cloud server receives the response parameter, and determines a driving behavior score of the driver based on the response parameter, where the driving behavior score of the driver is used to evaluate safety of the driving behavior of the driver.

It should be understood that a larger quantity of takeover reminders in a driving task indicates a lower driving behavior score, and a higher corresponding takeover reminder level when the driver takes over the vehicle in each takeover reminder indicates a lower driver behavior score.

In this embodiment of this application, when a result indicating that the driver is not in the loop is obtained through data collected by a driver monitoring apparatus of a cockpit and data collected by a mobile terminal, a driver reminder sent based on the result is more accurate, so that the response parameter of the driver taking over the vehicle is recorded more accurately. In this way, accuracy of subsequent information push is improved.

S1104: The cloud server pushes customized information to the vehicle based on the driving behavior score of the driver.

For example, if the driving behavior score of the driver is low, driving safety education information may be pushed to the vehicle; or if the driving behavior score of the driver is high, a new autonomous driving function may be pushed to the vehicle.

The hierarchical reminder mode of the cockpit and the hierarchical reminder mode of the mobile terminal are respectively used in FIG. 7 and FIG. 10, so that the driver reminder information can be transferred to the driver by using the mobile terminal and the apparatus of the cockpit. An occasion of sending each level of reminder in the hierarchical reminder mode of the cockpit and an occasion of sending each level of reminder in the hierarchical reminder mode of the mobile terminal are not limited in this embodiment of this application. For example, an occasion for sending an i^{th}-level reminder of the cockpit in the hierarchical reminder mode of the cockpit may be the same as or different from an occasion for sending an i^{th}-level reminder of the mobile terminal in the hierarchical reminder mode of the mobile terminal, where i=1, 2, or 3.

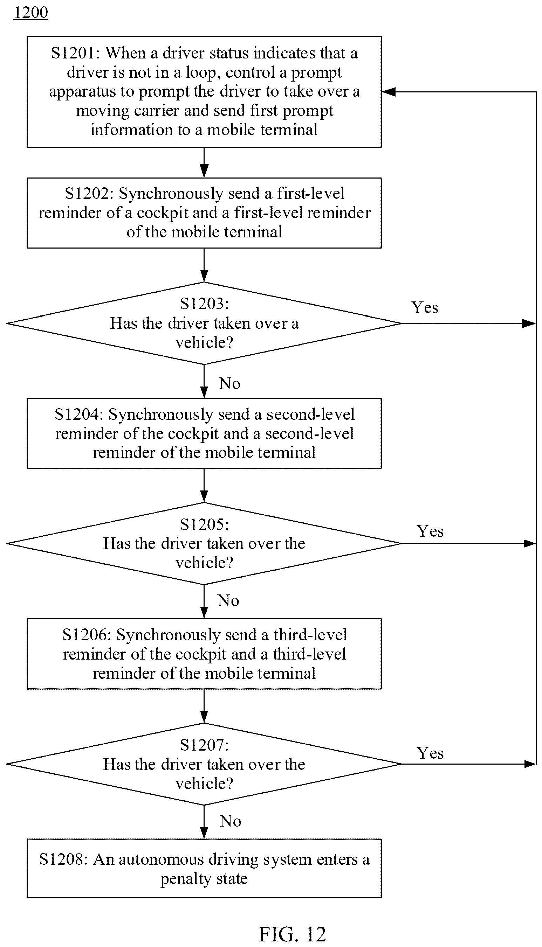

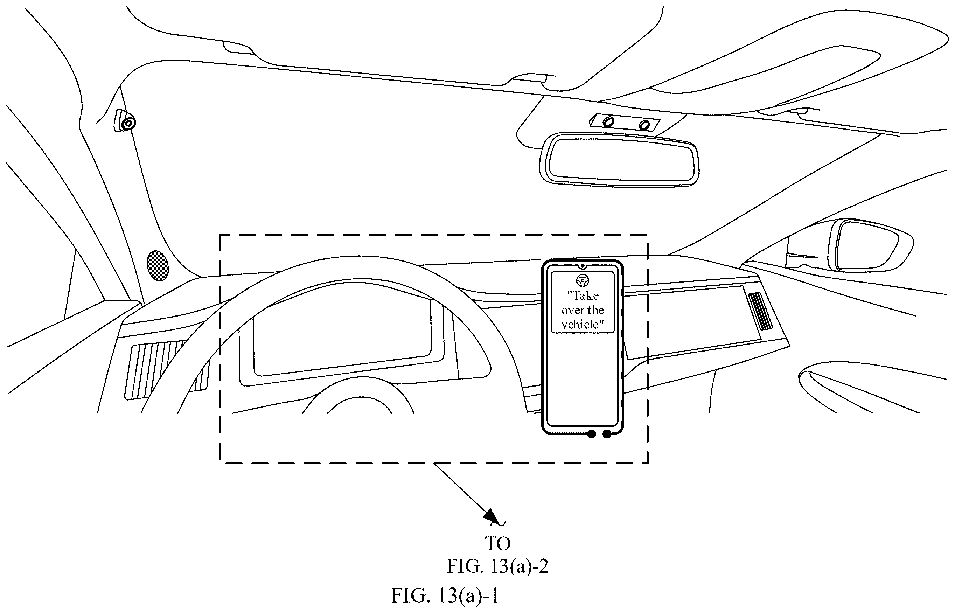

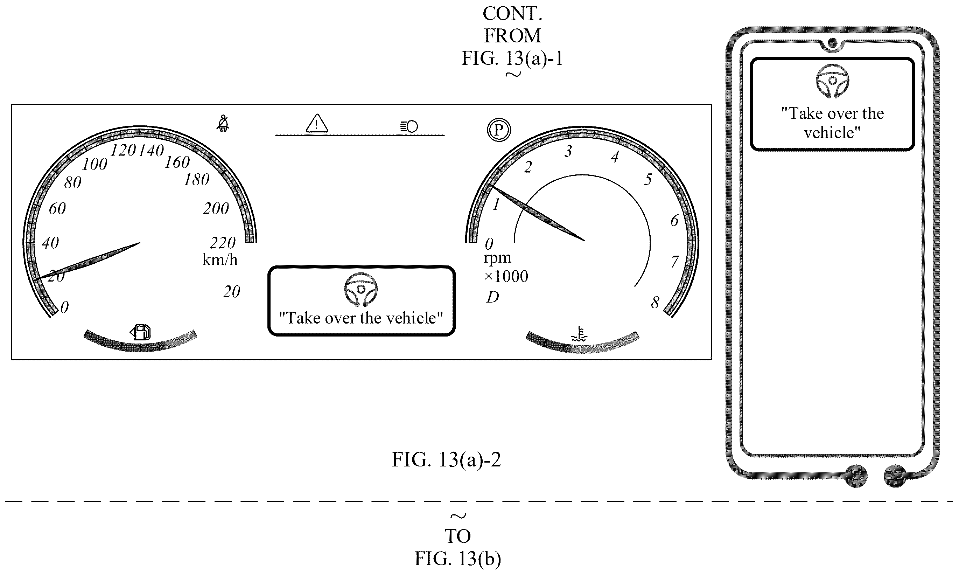

For example, the following describes in detail, with reference to FIG. 12 to FIG. 13(c), a process of sending the driver reminder information when an occasion for sending each level of reminder of the cockpit in the hierarchical reminder mode of the cockpit is the same as an occasion for sending each level of reminder of the mobile terminal in the hierarchical reminder mode of the mobile terminal. FIG. 12 to FIG. 13(c) are described by using the driver reminding method shown in FIG. 7 as an example. In addition, an example in which time triggers transfer of the driver reminder information is used for description.

FIG. 12 is a diagram of a procedure 1200 of sending driver reminder information according to an embodiment of this application.

S1201: When a driver status indicates that a driver is not in a loop, a computing platform of a vehicle controls a prompt apparatus to prompt the driver to take over a moving carrier and sends first prompt information to a mobile terminal.

S1202: The computing platform of the vehicle controls the prompt apparatus to send a first-level reminder of a cockpit, and synchronously sends the first prompt information to the mobile terminal through a first-level reminder of the mobile terminal.

In a possible implementation, duration in which the driver is not in a loop accumulates to a first threshold (for example, 15 seconds). The computing platform of the vehicle controls the prompt apparatus to send the first-level reminder of the cockpit, and synchronously sends the first prompt information to the mobile terminal through the first-level reminder of the mobile terminal.

In a possible implementation, when the driver status indicates that the driver is not in the loop and an emergency is detected, the computing platform of the vehicle controls the prompt apparatus to send the first-level reminder of the cockpit, and synchronously sends the first prompt information to the mobile terminal through the first-level reminder of the mobile terminal.

In this scenario, duration in which the driver is not in the loop has not accumulated to a first threshold. However, in this case, the emergency event is detected, and the driver needs to take over the vehicle.

For example, if the driver status includes that the driver pays attention to the mobile terminal, the computing platform of the vehicle controls a display apparatus in the vehicle cockpit to display takeover reminder information, and synchronously sends this display reminder to the mobile terminal.

For example, if the driver status includes that the driver does not pay attention to the mobile terminal, the computing platform of the vehicle controls a display apparatus in the vehicle cockpit to display takeover reminder information, and synchronously sends a vibration reminder to the mobile terminal; or the computing platform of the vehicle controls a display apparatus in the vehicle cockpit to display takeover reminder information, and synchronously sends a sound reminder to the mobile terminal.

S1203: Determine whether the driver has taken over the vehicle.

When the driver has taken over the vehicle, S1201 is performed, that is, a new reminding period in which the driver is to be reminded is entered. When the driver status indicates that the driver is not in the loop, the prompt apparatus is controlled to prompt the driver to take over the moving carrier and the first prompt information is sent to the mobile terminal.

When the driver does not take over the vehicle, S1204 is performed. To be specific, the computing platform of the vehicle controls the prompt apparatus to send a second-level reminder of the cockpit, and synchronously sends the first prompt information to the mobile terminal through a second-level reminder of the mobile terminal.

In a possible implementation, when the duration in which the driver is not in the loop accumulates to a second threshold (for example, 30 seconds), the computing platform of the vehicle controls the prompt apparatus to send the second-level reminder of the cockpit, and synchronously sends the second-level reminder of the mobile terminal to the mobile terminal.

In a possible implementation, after the emergency event is detected, when the duration in which the driver is not in the loop accumulates to a fourth threshold (for example, 20s), the computing platform of the vehicle controls the prompt apparatus to send the second-level reminder of the cockpit, and synchronously sends the second-level reminder of the mobile terminal to the mobile terminal.

In this scenario, when the emergency event is detected, the driver does not take over the vehicle under the first-level reminders of the cockpit and the mobile terminal. In this case, the duration in which the driver is not in the loop is accumulated to the fourth threshold, and the second-level reminders of the cockpit and the mobile terminal are triggered.

For example, if the driver status includes that the driver pays attention to the mobile terminal, that the computing platform of the vehicle controls the prompt apparatus to send the second-level reminder of the cockpit, and synchronously sends the first prompt information to the mobile terminal through the second-level reminder of the mobile terminal may be: First, the computing platform of the vehicle controls the display apparatus in the vehicle cockpit to display the takeover reminder information and the sound-making apparatus in the vehicle cockpit to send a sound reminder, and synchronously sends the display reminder and the sound reminder to the mobile terminal; or second, the computing platform of the vehicle controls the display apparatus in the vehicle cockpit to display the takeover reminder information and the sound-making apparatus in the vehicle cockpit to send a sound reminder, and synchronously sends the display reminder and the vibration reminder to the mobile terminal.

For example, if the driver status includes that the driver does not pay attention to the mobile terminal, that the computing platform of the vehicle controls the prompt apparatus to send the second-level reminder of the cockpit, and synchronously sends the first prompt information to the mobile terminal through the first-level reminder of the mobile terminal may include: First, the computing platform of the vehicle controls the display apparatus in the vehicle cockpit to display the takeover reminder information and the sound-making apparatus in the vehicle cockpit to send the sound reminder, and synchronously sends the vibration reminder and the sound reminder to the mobile terminal.

S1205: Determine whether the driver has taken over the vehicle.

When the driver has taken over the vehicle, S1201 is performed, that is, a new reminding period in which the driver is to be reminded is entered.

When the driver does not take over the vehicle, S1206 is performed. To be specific, the computing platform of the vehicle controls the prompt apparatus to send a third-level reminder of the cockpit, and synchronously sends the first prompt information to the mobile terminal through a third-level reminder of the mobile terminal.

In a possible implementation, when the duration in which the driver is not in the loop accumulates to a third threshold (for example, 50 seconds), the computing platform of the vehicle controls the prompt apparatus to send the third-level reminder of the cockpit, and synchronously sends the first prompt information to the mobile terminal through the third-level reminder of the mobile terminal.

In a possible implementation, after the emergency event is detected, when the duration in which the driver is not in the loop accumulates to a fifth threshold (for example, 35s), the computing platform of the vehicle controls the prompt apparatus to send the third-level reminder of the cockpit, and synchronously sends the third-level reminder of the mobile terminal to the mobile terminal.

In this scenario, when the emergency event is detected, the driver does not take over the vehicle under the first-level reminders and the second-level reminders of the cockpit and the mobile terminal. In this case, the duration in which the driver is not in the loop accumulates to the fifth threshold, and the third-level reminders of the cockpit and the mobile terminal are triggered.

For example, regardless of whether the driver status includes that the driver pays attention to the mobile terminal or includes that the driver does not pay attention to the mobile terminal, the computing platform of the vehicle controls: the display apparatus in the vehicle cockpit to display the takeover reminder information, the sound-making apparatus in the vehicle cockpit to send a sound reminder, and a seat belt in the vehicle cockpit to send the vibration reminder; and synchronously sends the display reminder, the sound reminder, and the vibration reminder of the mobile terminal to the mobile terminal.

S1207: Determine whether the driver has taken over the vehicle.

When the driver has taken over the vehicle, S1201 is performed, that is, a new reminding period in which the driver is to be reminded is entered.

When the driver does not take over the vehicle, S 1208 is performed. To be specific, an autonomous driving system enters a penalty state. For example, the autonomous driving system forcibly brakes.

In this embodiment of this application, the takeover reminding apparatus of the cockpit and the takeover reminding apparatus of the mobile terminal are synchronously used, so that timeliness and effectiveness of sending the driver reminder information can be enhanced, and traveling safety can be improved.

The following describes in detail a diagram of man-machine interaction between the driver reminder information of the cockpit and the driver reminder information of the mobile terminal with reference to FIG. 13(a)-1 to FIG. 13(c). An example in which time triggers transfer of driver reminder information is used for description.

FIG. 13(a)-1 to FIG. 13(c) are a diagram of man-machine interaction between driver reminder information of a cockpit and driver reminder information of a mobile terminal according to an embodiment of this application. FIG. 13(a)-1 to FIG. 13(c) show a driver status including that a driver pays attention to a mobile terminal.

As shown in FIG. 13(a)-1 and FIG. 13(a)-2, when duration in which the driver is not in a loop is accumulated to a first threshold, a display apparatus of a cockpit and a screen of the mobile terminal synchronously display a first-level reminder. For example, the display apparatus of the cockpit displays a reminder "Take over the vehicle", and synchronously, the screen of the mobile terminal displays a pop-up window "Take over the vehicle".

It should be understood that a computing platform of a vehicle may control, through in-vehicle communication (for example, an in-vehicle serial bus or an in-vehicle Ethernet network), the display apparatus in the vehicle to display the first-level reminder of the cockpit. The computing platform of the vehicle sends the first-level reminder of the mobile terminal to the mobile terminal through a wireless network; or the computing platform of the vehicle sends the first-level reminder to an in-vehicle cockpit digital platform through in-vehicle communication, and then the in-vehicle cockpit digital platform sends the first-level reminder to the mobile terminal through wireless communication.

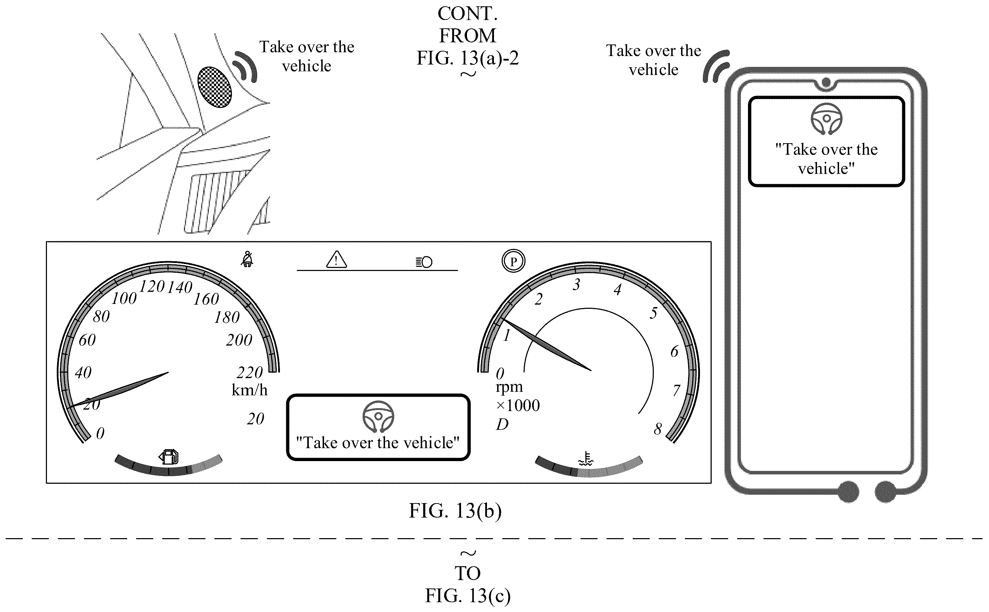

As shown in FIG. 13(b), when the driver does not take over the vehicle in time under the first-level reminder and the duration in which the driver is not in the loop accumulates to a second threshold, the display apparatus and a sound-making apparatus of the cockpit send a second-level reminder, and synchronously, the screen and a sound-making apparatus of the mobile terminal send a second-level reminder. For example, the display apparatus of the cockpit displays the reminder "Take over the vehicle", and the sound-making apparatus of the cockpit sends the reminder "Take over the vehicle". Synchronously, the screen of the mobile terminal displays the pop-up window "Take over the vehicle", and the sound-making apparatus of the mobile terminal sends a voice reminder "Take over the vehicle".

It should be understood that FIG. 13(b) shows only a second-level reminder mode sent by the cockpit and the mobile terminal if the driver pays attention to the mobile terminal. For details about another second-level reminder mode, refer to the foregoing descriptions.

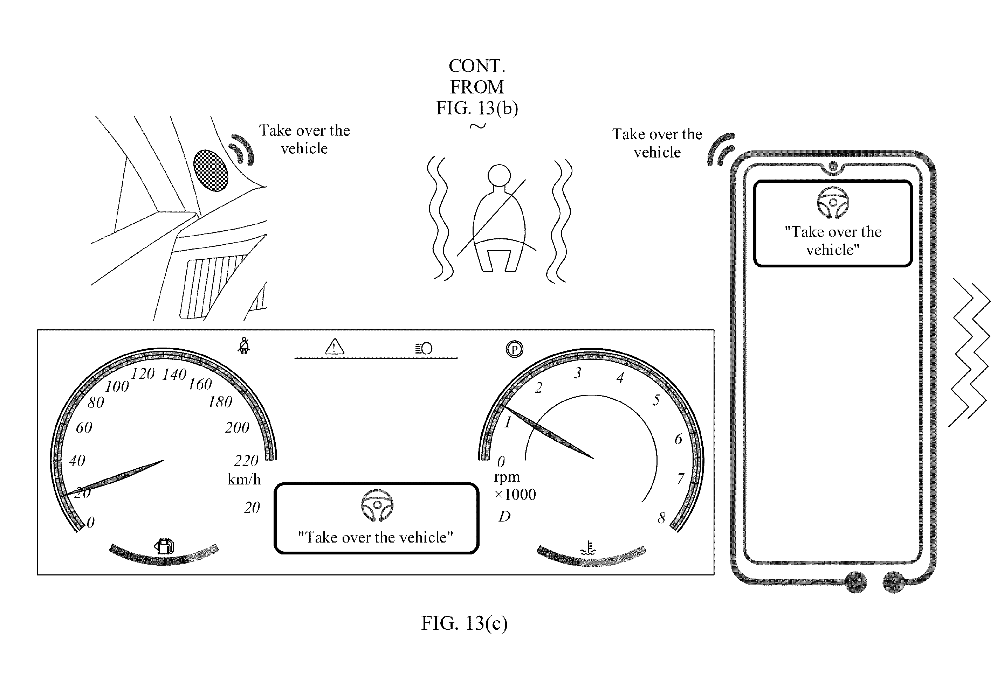

As shown in FIG. 13(c), when the driver does not take over the vehicle in time under the second-level reminder, and the duration in which the driver is not in the loop accumulates to a third threshold, the display apparatus, the sound-making apparatus, and a vibration apparatus (for example, an active seat belt vibrates) of the cockpit send a three-level reminder, and synchronously, the screen, the sound-making apparatus, and a vibration apparatus of the mobile terminal send a three-level reminder. For example, the display apparatus of the cockpit displays the reminder "Take over the vehicle", the sound-making apparatus of the cockpit sends the reminder "Take over the vehicle", and the seat belt of the driver sends a vibration reminder. Synchronously, the screen of the mobile terminal displays the pop-up window "Take over the vehicle", the sound-making apparatus of the mobile terminal sends the voice reminder "Take over the vehicle", and the vibration apparatus of the mobile terminal sends a vibration reminder.

When the driver does not take over the vehicle in time under the three-level reminder, an autonomous driving system enters a penalty state. For example, the autonomous driving system forcibly brakes.

In a possible implementation, an occasion for sending each level of reminder of the cockpit in the hierarchical reminder mode of the cockpit may be different from an occasion for sending each level of reminder of the mobile terminal in the hierarchical reminder mode of the mobile terminal.

For example, the prompt apparatus is first controlled to send the first-level reminder of the cockpit. When the driver does not take over the vehicle, and the driver pays attention to the mobile terminal, the first-level reminder of the mobile terminal is sent to the mobile terminal. If the driver does not take over the vehicle, subsequently, the second-level reminder of the cockpit, the second-level reminder of the mobile terminal, the third-level reminder of the cockpit, and the third-level reminder of the mobile terminal are sequentially sent. If the driver does not take over the vehicle under a multi-level reminder of the plurality of devices, the autonomous driving system enters the penalty state.

In this embodiment of this application, the occasion for sending the takeover reminder information of the cockpit and the occasion for sending the takeover reminder information of the mobile terminal are staggered, to avoid a case in which the plurality of devices simultaneously send the takeover reminders. Different devices send the reminder information at staggered time, so that a frequency of takeover reminders is increased when total reminding duration remains unchanged. In comparison, in a current case in which a takeover reminder is performed only based on a device of the cockpit, even if a current reminding frequency is increased, after the takeover reminder sent in the cockpit is missed, takeover reminder information may not be effectively received to take over the vehicle in time and improve traveling safety. In addition, the takeover reminder information is sent at staggered occasions, so that the driver can be prevented from feeling bored for receiving excessive reminder information at a same moment. In this way, user experience is improved while traveling safety is improved.

In a possible implementation, the first-level reminder of the cockpit and the first-level reminder of the mobile terminal are sent on a same occasion. If the driver does not take over the vehicle, the second-level reminder of the cockpit is sent in sequence, and then the second-level reminder of the mobile terminal is sent. If the driver does not take over the vehicle under the second-level reminders of the cockpit and the mobile terminal, the third-level reminder of the cockpit and the third-level reminder of the mobile terminal are synchronously sent. If the driver does not take over the vehicle under the multi-level reminder of the plurality of devices, the autonomous driving system enters the penalty state.

In this embodiment of this application, when the driver is not in the loop, the driving vehicle speed meets a vehicle speed threshold condition, and the emergency occurs or the duration in which the driver is not in the loop reaches the first threshold, the driver may be reminded to take over at the first time by using a plurality of devices. This prevents the driver from missing the takeover reminder information at the first time, and improves traveling safety.

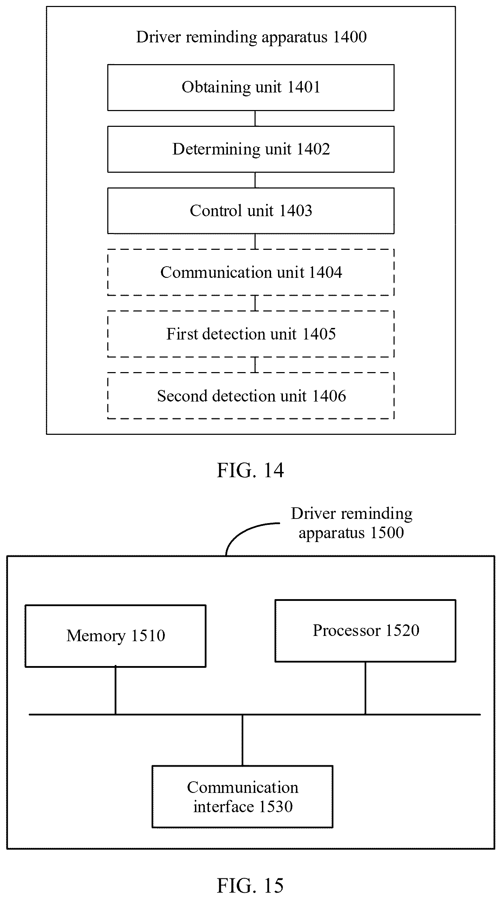

The foregoing content is the driver reminding method in embodiments of this application. The following describes the driver reminding apparatus in detail with reference to FIG. 14 and FIG. 15. It should be understood that descriptions of the apparatus embodiments correspond to the descriptions of the method embodiments. Therefore, for content that is not described in detail, refer to the foregoing method embodiments. For brevity, details are not described herein again.

FIG. 14 is a diagram of a driver reminding apparatus according to an embodiment of this application. As shown in FIG. 14, the apparatus includes an obtaining unit 1401, a determining unit 1402, and a control unit 1403.

The obtaining unit 1401 is configured to: when a moving carrier is in a traveling state, obtain first data collected by a sensor of a mobile terminal, and obtain second data collected by a sensor of a cockpit of the moving carrier.

The determining unit 1402 is configured to determine a driver status based on the first data and the second data.

The control unit 1403 is configured to: when the driver status indicates that a driver is not in a loop, control a prompt apparatus to prompt the driver to take over the moving carrier.

Optionally, the apparatus further includes a communication unit 1404. The communication unit 1404 is configured to send first prompt information to the mobile terminal, where the first prompt information indicates the driver to take over the moving carrier.

Optionally, the apparatus further includes a first detection unit 1405, where when the first detection unit 1405 detects that the driver pays attention to the mobile terminal, the communication unit 1404 is configured to send the first prompt information to the mobile terminal.

Optionally, the control unit 1403 is configured to control, based on duration in which the driver is not in the loop, the prompt apparatus to prompt the driver to take over the moving carrier.

Optionally, the apparatus further includes a second detection unit 1406. When the driver status indicates that the driver is not in the loop, and the second detection unit 1406 detects that an emergency event occurs, the control unit 1403 is configured to control the prompt apparatus to prompt the driver to take over the moving carrier.

Optionally, the determining unit 1402 is further configured to: before the prompt apparatus is controlled to prompt the driver to take over the moving carrier, determine that a traveling speed of the moving carrier is greater than or equal to a speed threshold.

For example, the obtaining unit 1401 may be the computing platform in FIG. 1, or a processing circuit, a processor, or a controller in the computing platform. For example, the obtaining unit 1401 is the processor 151 in the computing platform. When the moving carrier is in a traveling state, the processor 151 may obtain the first data collected by the sensor of the mobile terminal and the second data collected by the sensor in the mobile cockpit.

For example, the determining unit 1402 may be the computing platform in FIG. 1, or a processing circuit, a processor, or a controller in the computing platform. For example, the determining unit 1402 is the processor 152 in the computing platform. The processor 152 may determine the driver status based on the first data and the second data.

For example, the control unit 1403 may be the computing platform in FIG. 1, or a processing circuit, a processor, or a controller in the computing platform. For example, the control unit 1403 is the processor 153 in the computing platform. When the driver status indicates that the driver is not in the loop, the processor 152 may control the prompt apparatus to prompt the driver to take over the moving carrier.

The function implemented by the obtaining unit 1401, the function implemented by the determining unit 1402, and the function implemented by the control unit 1403 may be implemented by different processors, or may be implemented by a same processor. This is not limited in this embodiment of this application.

It should be understood that division of the units in the foregoing apparatuses is merely logical function division. During actual implementation, all or some of the units may be integrated into one physical entity, or may be physically separated. In addition, the units of the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of the units of the apparatus. The processor is, for example, a general-purpose processor, for example, a CPU or a microprocessor, and the memory is a memory inside the apparatus or a memory outside the apparatus. Alternatively, the units of the apparatus may be implemented in a form of a hardware circuit, and functions of some or all of the units may be implemented by designing the hardware circuit. The hardware circuit may be understood as one or more processors. For example, in an implementation, the hardware circuit is an ASIC, and functions of some or all of the foregoing units are implemented by designing a logical relationship between elements in the circuit. For another example, in another implementation, the hardware circuit may be implemented by using a PLD. An FPGA is used as an example. The hardware circuit may include a large quantity of logic gate circuits, and a connection relationship between the logic gate circuits is configured by using a configuration file, to implement functions of some or all of the foregoing units. All units of the foregoing apparatuses may be implemented in a form of software invoked by the processor, or all units may be implemented in a form of the hardware circuit, or some units may be implemented in a form of software invoked by the processor, and a remaining part may be implemented in a form of the hardware circuit.

In embodiments of this application, the processor is a circuit having a signal processing capability. In an implementation, the processor may be a circuit having a capability of instruction reading and running, for example, a CPU, a microprocessor, a GPU, or a DSP. In another implementation, the processor may implement a specific function based on a logical relationship of a hardware circuit. The logical relationship of the hardware circuit is fixed or reconfigurable. For example, the processor is a hardware circuit implemented by an ASIC or a PLD, for example, an FPGA. In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, an NPU, a TPU, or a DPU.

It can be learned that each unit of the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units of the foregoing apparatus may be integrated, or may be implemented independently. In an implementation, these units are integrated together and implemented in a form of an SOC. The SOC may include at least one processor, configured to implement any one of the methods or implement functions of the units of the apparatus. Types of the at least one processor may be different, for example, the at least one processor includes a CPU and an FPGA, a CPU and an artificial intelligence processor, or a CPU and a GPU.

FIG. 15 is a diagram of a hardware structure of a driver reminding apparatus according to an embodiment of this application. The driver reminding apparatus 1500 shown in FIG. 15 may include a memory 1510, a processor 1520, and a communication interface 1530. The memory 1510, the processor 1520, and the communication interface 1530 are connected through an internal connection path. The memory 1510 is configured to store instructions. The processor 1520 is configured to execute the instructions stored in the memory 1520, to control the input/output interface 1530 to receive/send at least some parameters of a second channel model. Optionally, the memory 1510 may be coupled to the processor 1520 through an interface, or may be integrated together with the processor 1520.

For example, the driver reminding apparatus 1500 may be the computing platform 150 in FIG. 1.

It should be noted that the communication interface 1530 uses a transceiver apparatus, for example, but not limited to, a transceiver, to implement communication between the communication device 1500 and another device or a communication network. The communication interface 1530 may further include an input/output interface (input/output interface).

In an implementation process, steps in the foregoing methods can be implemented through a hardware integrated logical circuit in the processor 1520, or by using instructions in a form of software. The method of the communication disclosed with reference to embodiments of this application may be directly performed by a hardware processor, or may be performed through a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory 1510, and the processor 1520 reads information in the memory 1510 and completes the steps in the foregoing methods in combination with the hardware of the processor. To avoid repetition, details are not described herein again.

It should also be understood that in embodiments of this application, the memory may include a read-only memory and a random access memory, and provide instructions and data to the processor. A part of the processor may further include a non-volatile random access memory. For example, the processor may further store information of a device type.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

An embodiment of this application further provides a display system. The display system includes a computing platform and a prompt apparatus. The computing platform may include the driver reminding apparatus 1500.

For example, the prompt apparatus may include at least one of a display apparatus, a sound-making apparatus (for example, a speaker), a seat belt vibration apparatus, and an atmosphere light.

An embodiment of this application further provides an apparatus. The apparatus includes a processing unit and a storage unit. The storage unit is configured to store instructions, and the processing unit executes the instructions stored in the storage unit, so that the apparatus performs the driver reminding method.

An embodiment of this application further provides a computer-readable medium. The computer-readable medium stores program code. When the computer program code is run on a computer, the computer is enabled to perform the foregoing method.

An embodiment of this application further provides a chip, including at least one processor and a memory. The at least one processor is coupled to the memory, and is configured to read and execute instructions in the memory, to perform the foregoing method.

An embodiment of this application further provides a vehicle, including at least one processor and a memory. The at least one processor is coupled to the memory, and is configured to read and execute instructions in the memory, to perform the foregoing method.

Terminologies such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different apparatuses to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments. Details are not described herein again.

In the several embodiments provided in this application, it should be understood that the disclosed system, method, and apparatus may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in the embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the apparatuses described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A driver reminding method, comprising:
when a moving carrier is in a traveling state, obtaining first data collected by a sensor of a mobile terminal, and obtaining second data collected by a sensor of a cockpit of the moving carrier;
determining a driver status based on the first data and the second data; and
when the driver status indicates that the driver is not in a loop, controlling a prompt apparatus to prompt the driver to take over the moving carrier.

2. The method according to claim 1, wherein the method further comprises:
sending first prompt information to the mobile terminal, wherein the first prompt information indicates the driver to take over the moving carrier.

3. The method according to claim 2, wherein the sending first prompt information to the mobile terminal comprises:
sending the first prompt information to the mobile terminal when it is detected that the driver pays attention to the mobile terminal.

4. The method according to any one of claims 1 to 3, wherein the controlling a prompt apparatus to prompt the driver to take over the moving carrier comprises:
controlling, based on duration in which the driver is not in the loop, the prompt apparatus to prompt the driver to take over the moving carrier.

5. The method according to any one of claims 1 to 3, wherein the controlling a prompt apparatus to prompt the driver to take over the moving carrier comprises:
when the driver status indicates that the driver is not in the loop and an emergency event is detected, controlling the prompt apparatus to prompt the driver to take over the moving carrier.

6. The method according to any one of claims 1 to 5, wherein the method further comprises:
before the prompt apparatus is controlled to prompt the driver to take over the moving carrier, determining that a traveling speed of the moving carrier is greater than or equal to a speed threshold.

7. A driver reminding apparatus, wherein the apparatus comprises an obtaining unit, a determining unit, and a control unit, wherein
the obtaining unit is configured to: when a moving carrier is in a traveling state, obtain first data collected by a sensor of a mobile terminal, and obtain second data collected by a sensor of a cockpit of the moving carrier;
the determining unit is configured to determine a driver status based on the first data and the second data; and
the control unit is configured to: when the driver status indicates that the driver is not in a loop, control a prompt apparatus to prompt the driver to take over the moving carrier.

8. The apparatus according to claim 7, wherein the apparatus further comprises a communication unit, wherein
the communication unit is configured to send first prompt information to the mobile terminal, wherein the first prompt information indicates the driver to take over the moving carrier.

9. The apparatus according to claim 8, wherein the apparatus further comprises a first detection unit, wherein
when the first detection unit detects that the driver pays attention to the mobile terminal, the communication unit is configured to send the first prompt information to the mobile terminal.

10. The apparatus according to any one of claims 7 to 9, wherein the control unit is configured to:
control, based on duration in which the driver is not in the loop, the prompt apparatus to prompt the driver to take over the moving carrier.

11. The apparatus according to any one of claims 7 to 9, wherein the apparatus further comprises a second detection unit, and the control unit is configured to:
when the driver status indicates that the driver is not in the loop, and the second detection unit detects that an emergency event occurs, control the prompt apparatus to prompt the driver to take over the moving carrier.

12. The apparatus according to any one of claims 7 to 11, wherein the determining unit is further configured to:
before the control unit controls the prompt apparatus to prompt the driver to take over the moving carrier, determine that a traveling speed of the moving carrier is greater than or equal to a speed threshold.

13. A driver reminding apparatus, wherein the driver reminding apparatus comprises at least one processor and an interface circuit, and the processor communicates with a prompt apparatus through the interface circuit; and
the at least one processor is configured to perform the method according to any one of claims 1 to 6, to control the prompt apparatus.

14. A driver reminding system, wherein the driver reminding system comprises a computing platform and a prompt apparatus, and the computing platform comprises the driver reminding apparatus according to any one of claims 7 to 13.

15. A moving carrier, comprising the driver reminding apparatus according to any one of claims 7 to 13, or comprising the driver reminding system according to claim 14.

16. The moving carrier according to claim 15, wherein the moving carrier is a vehicle.

17. A computer-readable storage medium, wherein the computer-readable storage medium stores a computer program, and when the computer program is executed by a computer, the method according to any one of claims 1 to 6 is implemented.

18. A chip, wherein the chip comprises a processor and a data interface, and the processor reads, through the data interface, instructions stored in a memory, to perform the method according to any one of claims 1 to 6.
